# EUROPÄISCHE PATENTSCHRIFT

(11) **EP 3 265 772 B1**
(45) Veröffentlichungstag und Bekanntmachung des Hinweises auf die Patenterteilung: **12.10.2022**
(21) Anmeldenummer: 16708138.9
(22) Anmeldetag: 04.03.2016
(51) Int. Cl.: G01M 17/007, G01M 9/06

(54) **MEHRFACHKONFIGURATIONSWINDKANALWAAGE UND VERFAHREN ZUM UMRÜSTEN DER WINDKANALWAAGE**
MULTIPLE CONFIGURATION WIND TUNNEL BALANCE AND METHOD FOR RETROFITTING THE WIND TUNNEL BALANCE
BALANCE AÉRODYNAMIQUE À CONFIGURATION MULTIPLE ET PROCÉDÉ PERMETTANT DE MODIFIER LA CONFIGURATION DE LADITE BALANCE

(30) Priorität: 05.03.2015 DE 102015204020
(43) Veröffentlichungstag der Anmeldung: 10.01.2018
(73) Patentinhaber: AIP GmbH & Co. KG, 87490 Haldenwang (DE)
(72) Erfinder: KNESTEL, Anton, 87496 Hopferbach (DE); HARTMANN, Christian, 87452 Altusried (DE); BECHERER, Thomas, 87463 Dietmannsried (DE)
(74) Vertreter: MERH-IP Matias Erny Reichl Hoffmann Patentanwälte PartG mbB
(86) Internationale Anmeldenummer: PCT/EP2016/054608
(87) Internationale Veröffentlichungsnummer: WO 2016/139325

(56) Entgegenhaltungen:
- DE-A1-102011 085 640
- US-A1- 2007 039 400

## Beschreibung

Die hier beschriebene Windkanalwaage bzw. Windkanalprüfstand und das dazugehörige Verfahren ermöglichen ein schnelles Umrüsten der Windkanalwaage beispielsweise von einer Fünfbandkonfiguration in eine Einbandkonfiguration und umgekehrt. Die hier beschriebene Windkanalwaage ist insbesondere so ausgebildet, dass das Umrüsten mit einem Austausch von nur wenigen Windkanalwaagenbauteilen und mit hoher Prozesssicherheit und Genauigkeit durchführbar ist. Die Messgenauigkeit des Windkanalprüfstandes ist in allen Konfigurationen, und insbesondere in einer Einband- und Dreibandkonfiguration, sehr hoch und es können bereits geringste Kräfte, bspw. von wenigen Newton, sicher erfasstwerden.

Während der Entwicklung von Kraftfahrzeugen, wie z.B. Personenkraftwagen oder auch Rennwagen, werden diese üblicherweise in Windkanälen auf ihre aerodynamischen Eigenschaften hin getestet. Zur Messung von Kräften, die bei diesen aerodynamischen Versuchen auf das Kraftfahrzeug wirken, werden bislang, je nach Prüfziel und Art des Kraftfahrzeuges, unterschiedliche Prüfstände bzw. Windkanalwaagen herangezogen. In Windkanalwagen wird durch ein großes Gebläse ein realistischer Luftstrom auf das Fahrzeug geblasen. Damit sich dieser aerodynamisch realistisch ausbildet, muss sich auch der Fahrzeugunterboden mit Windgeschwindigkeit bewegen.

Bekannte Prüfstandarten weisen beispielsweise eine unterschiedliche Anzahl von Bandeinheiten auf und entsprechend wird bspw. zwischen Einband-, Dreiband und Fünfbandprüfständen unterschieden. Das Koordinatensystem der Prüfstände wird regelmäßig derart gewählt, dass die X-Achse in Laufrichtung eines Laufbandes des Prüfstandes/Windkanalwaage zeigt. Die Y-Achse steht quer zum Laufband. Die Z-Achse zeigt ausgehend von der Oberfläche eines Obertrums des Laufbandes weg vom Laufband. Dieses Koordinatensystem wird auch in den nachfolgend beschriebenen Figuren verwendet.

Bei den sogenannten Fünfband-Anlagen wird die Strömung am Fahrzeugunterboden durch ein sogenanntes Mittellaufband oder Mittenband simuliert. Das Mittellaufband ist hierbei jeweils nur so breit, dass die Fahrzeugräder und die Halterungen (Schwellerstützen bzw. Rockerpanells) nicht auf dem Mittellaufband aufstehen. Die Räder des Fahrzeuges stehen auf möglichst kompakten gesonderten Radbandeinheiten auf.

Mit anderen Worten sind bei einem Fünfbandprüfstand eine Mittenbandeinheit und seitlich dazu vier kleinere (Rad-)Bandeinheiten vorgesehen. Gewöhnlich wird ein Kraftfahrzeug auf die vier seitlichen Bandeinheiten aufgestellt und die Bandeinheiten werden gewogen.

Fünfbandprüfstände werden bevorzugt bei der Vermessung bzw. beim Testen von Personenkraftwagen herangezogen, da das Montieren von Kraftfahrzeugen auf einem Fünfbandprüfstand regelmäßig weniger zeitaufwendig ist als bei Einbandprüfständen. Einbandprüfstände werden insbesondere für Kraftfahrzeuge mit hohen Abtriebskräften bevorzugt, wie zum Beispiel Rennsportfahrzeuge, die meistens deutlich höhere Abtriebskräfte als Personenkraftwagen bzw. Serienfahrzeuge erzeugen.

Bei Wettbewerbsfahrzeugen (Sport- oder Rennautos) wird das komplette Fahrzeug oder ein Modell des Fahrzeuges auf einem einzelnen großen Laufband aufgestellt. Bei dieser Konfiguration spricht man üblicherweise von einer Einbandprüfstand(-Konfiguration) oder einem Single Belt Prüfstand. Das Laufband der Einbandrolleneinheit ist breiter als die (größte) Fahrzeugbreite und reicht in Längsrichtung, speziell hinter dem Fahrzeug, über das Fahrzeug hinaus.

Mit anderen Worten weisen Einbandprüfstände üblicherweise eine Bandeinheit mit einem breiten durchgehenden Laufband auf, das auf zwei Rollen bzw. Trommeln umläuft. Das Kraftfahrzeug wird für aerodynamische Versuche mit allen Rädern auf diesem einzelnen Laufband positioniert (deshalb Einbandprüfstand) und relativ dazu fixiert. Dazu können beispielsweise Fixiereinrichtungen verwendet werden, die seitlich zum Laufband angeordnet sind. Die Räder können von Lagern, die unterhalb des Obertrums des Laufbandes zwischen den Rollen angeordnet sein können, gestützt werden. Die Lager können Wiegepads oder dgl. aufweisen, so dass durch das Band hindurch Z-Kräfte erfasst werden können (man spricht in diesem Zusammenhang von einer Durchbandmessung).

Einbandprüfstände sind besonders die bevorzugte Wahl bei der Messung bzw. beim Testen von Rennsportwagen, da hier u.a. ein genaues Bild von Abtriebskräften gewonnen werden kann, die insbesondere bei Rennsportwagen von großer Bedeutung sind.

Es sei angemerkt, dass die oben beschriebene Durchbandmessung auch bei Dreiband-, Fünfband- und Siebenbandprüfständen Anwendung finden kann. Bei Dreibandprüfständen stehen die Reifen des Kraftfahrzeuges auf schmaleren Seitenbandeinheiten auf. Zur Simulation der Fahrfläche läuft zwischen den Laufbändern der seitlichen Bandeinheiten ein sogenanntes Mittenband. Die Durchbandmessung erfolgt an den beiden seitlichen Bandeinheiten. Bei Fünfbandprüfständen wird die Durchbandmessung insbesondere herangezogen, wenn die Spurbreite eines Fahrzeuges kleiner oder gleich der Breite des Mittenbandes ist und das Kraftfahrzeug lediglich auf dem Mittenband aufsteht.

Verschiedene Kraftfahrzeughersteller sind sowohl im Serienfahrzeugbau als auch im Bau von Wettbewerbsfahrzeugen engagiert. Da der Bau eines Windkanals mit einem Hochleistungsgebläse hohe Kosten verusacht, besteht der Wunsch nach einem konvertierbaren/umrüstbaren Prüfstand der es erlaubt, möglichst schnell von einer sogenannten Fünfband-Anlage auf eine "Single-Belt-Anlage" oder Dreiband-Anlage umzurüsten. Hierbei ist es auch denkbar, dass die Single-Belt-Anlage aus mehreren Teilbändern besteht.

Die DE 10 2008 036 315 B4 beschreibt einen Windkanalprüfstand, der von einer Fünfbandkonfiguration in eine Dreibandkonfiguration umrüstbar ist. Auf der dort beschriebenen Wägeplattform können Radbandeinheiten installiert werden, die zusammen mit einem ortsfest installierten Mittellaufband eine Fünfbandkonfiguration ausbilden. Die vier Radbandeinheiten können entfernt werden und zwei einzelne Seitenlaufbänder auf der Wägeplattform angeordnet werden.

Da die großen und schweren Seitenbänder auf der Wägeplattform befestigt werden, muss die Wägeplattform großen Massen tragen. Dies reduziert jedoch die Messgenauigkeit der Wägeplattform und durch die große Masse, die auf der Wägeplattform lastet, wird auch die Eigenresonanz der Waage unerwünscht herabgesetzt. Ein weiterer sehr beachtlicher Nachteil ist zudem, dass parasitäre Kräfte bzw. Scheinkräfte und Rollwiderstände der Räder auf den Seitenbändern nicht von aerodynamischen Kräften separiert werden können.

In der US2007/039400 A1 wird eine Plattformwaage beschrieben, die für den Einsatz in einem Windkanal geeignet ist. Die Plattformwaage umfasst zwei Rahmenträger und vier Messumformeanordungen, die mit den Rahmenträgern gekoppelt sind. Wird die Plattformwaage in einem Windkanal eingesetzt, so sind die Laufbänder des Windkanalprüfstands auf einem Zwischenrahmen angeordnet, der über Biegeelemente mit der Plattformwaage verbunden ist.

In der DE 10 2011085 640 wird ein Einband-Windkanalprüfstand beschrieben, der es insbesondere ermöglicht, dass Scheinkräfte (z.B. durch die Fahrzeugfixierung erzeugt) und Rollwiderstände der Räder von aerodynamischen Kräften separiert werden können. Das Laufband bzw. die Einbandeinheit ist schwimmend/gleitend gelagert. Eine Bewegung in X- und/oder Y-Richtung stützt sich über ein Kraftmessmittel auf der Wägeplattform ab. Die Einbandeinheit ist mit der Wägeplattform in Z-Richtung im Hinblick auf die Kraftübertragung entkoppelt, während eine solche Kraftkopplung für die X- und/oder Y-Richtung gegeben ist. Ein Nachteil dieses Windkanalprüfstandes ist jedoch, dass die Anlage nicht oder nur mit großem Zeitaufwand konvertierbar ist, z.B. von einer Einband- in eine Fünfbandkonfiguration.

Es besteht Bedarf für Windkanalwaagen bzw. Windkanalprüfstände, mit denen sowohl Personenkraftwagen als auch Rennsportwagen getestet werden können, ohne dass auf die Vorteile der jeweiligen Prüfstandarten bzw. Prüfstandkonfigurationen, insbesondere Einband-, Dreiband- und Fünfbandkonfiguration, verzichtet werden muss und der in allen Konfigurationen eine höchstmögliche Genauigkeit bei der Messung von Kräften ermöglicht. Das Vorhalten zweier (oder mehr) verschiedener Prüfstandarten in unterschiedlichen Windkanälen ist allerdings sehr kostenintensiv und damit unwirtschaftlich.

Folglich besteht Bedarf für einen Windkanalprüfstand bzw. eine Windkanalwaage und ein dazugehöriges Verfahren, der es erlaubt, mit relativ geringem zeitlichem und baulichem Aufwand von einer Prüfstandart in eine andere Prüfstandart umgerüstet zu werden, wobei die Messgenauigkeit in jeder Konfiguration möglichst hoch ist. Mit anderen Worten besteht Bedarf für ein Verfahren und eine Windkanalwaage, die verschiedene Konfigurationen im Hinblick auf die Anzahl der Bandeinheiten aufweist und die eine sehr hohe Messgenauigkeit - zusammen mit der Möglichkeit einen Wechsel zwischen den Konfigurationen schnell und sicher durchzuführen - bietet.

Die Aufgabe wird von der Erfindung gemäß den unabhängigen Patentansprüchen gelöst. Weitere bevorzugte Entwicklungen werden von den abhängigen Patentansprüchen beschrieben.

Ein Aspekt der Erfindung betrifft einen Windkanalprüfstand. Bevorzugt kann dieser ein Mehrfachkonfigurations-Windkanalprüfstand sein, der zumindest in eine Einband-, Dreiband- und/oder Fünfbandkonfiguration umrüstbar sein kann.

Der Windkanalprüfstand kann einen Prüfstandrahmen zum Aufnehmen von Kräften, die beispielweise auf ein zu prüfendes Kraftfahrzeug wirken können, sowie eine (Wäge-)Plattform aufweisen. Die Wägeplattform kann relativ bewegbar zum Prüfstandrahmen gelagert sein.

Die relative Bewegung der Wägeplattform gegenüber dem Prüfstandrahmen kann insbesondere über zwei bevorzugte Möglichkeiten realisiert werden. So können elastische Bauteile vorgesehen sein, die einen (ggf. nur sehr minimalen) Federweg als Relativbewegung zulassen. Diese elastischen Bauteile können besonders bevorzugt Krafterfassungsmittel sein, die die übertragene Kraft erfassen können. Eine weitere Möglichkeit, eine Relativbewegung zuzulassen, kann es sein, eine zumindest innerhalb einer vorbestimmten Bewegungsamplitude freie Relativbewegung zuzulassen. Im Gegensatz zu einer relativen Bewegbarkeit soll insbesondere eine (starre) (Bewegungs-)Kopplung angesehen werden, die weder über eine freie Strecke noch über einen Federweg eine Relativbewegung zulässt. Mit Federweg kann hier auch eine geringe Verformung, wie sie z.B. ein Piezomaterial bei Druckbelastung ausführt, gemeint sein.

Mit anderen Worten kann "relativ bewegbar" so verstanden werden, dass eine freie Beweglichkeit in der entsprechenden Richtung und relativ zu den genanntem zweiten Bauteil möglich ist. Alternativ oder zusätzlich kann "relativ bewegbar" auch bedeuten, dass zumindest ein Krafterfassungsmittel zwischen den beiden relativ zueinander bewegbaren Bauteilen/Komponenten vorgesehen ist. Beispielsweise kann die relative Bewegbarkeit zwischen Prüfstandrahmen und Wägeplattform in besonders bevorzugter Ausführung dadurch erreicht werden, dass die Wägeplattform in X-, Y- und Z-Richtung über zumindest ein Krafterfassungsmittel mit dem Prüfstandrahmen verbunden sein kann. Ein weiteres Beispiel wäre ein unten näher erläuterter Schlitten, der bspw. in X-Richtung dadurch relativ bewegbar zu dem Prüfstandrahmen gelagert sein kann, dass diese beiden Komponenten in dieser (X-)Richtung mittels zumindest einem Krafterfassungsmittel miteinander verbunden sind.

Ferner kann zumindest ein Krafterfassungsmittel, das zwischen der Wägeplattform und dem Prüfstandrahmen angeordnet sein kann, vorgesehen sein, um damit beispielsweise Kräfte zwischen Wägeplattform und Prüfstandrahmen erfassen zu können. Die Krafterfassungsmittel können bevorzugt Kraftmessdosen und/oder Dehnmessstreifen aufweisen. Mithilfe des/der Krafterfassungsmittel(s) können bevorzugt Kräfte sowohl übertragen als auch erfasst werden. Bei Anordnung eines oder mehrerer Krafterfassungsmittel zwischen der Plattform und dem Prüfstandrahmen können beispielsweise die zwischen diesen Komponenten auftretenden/übertragenen Kräfte erfasst werden, die insbesondere von Kräften resultieren können, die auf das Fahrzeug, auf die Bandeinheit bzw. auf das Laufband wirken können.

Weiter kann der Windkanalprüfstand zumindest eine Bandeinheit mit zwei Laufrollen und einem darum geschlungenen Laufband aufweisen. Im Falle von Radbandeinheiten, Seitenbandeinheiten und Einbandeinheit kann diese Bandeinheit zum Aufstellen von zumindest einem Kraftfahrzeugrad des zu prüfenden Kraftfahrzeuges vorgesehen sein. Auf eine Mittenbandeinheit werden regelmäßig keine Räder aufgestellt, da diese insbesondere die Fahrbahn simulieren soll. Dies Bandeinheit(en) kann bzw. können beispielsweise zumindest einen Bandeinheitsrahmen umfassen, an dem das Laufband angeordnet sein kann, das um die zumindest zwei Rollen geschlungen sein kann.

Die Bandeinheit(en) kann/können je nach Konfiguration unterschiedlich gestaltet sein. So kann eine Einbandeinheit einer Einbandkonfiguration breiter und länger sein als die zu testenden/prüfenden Kraftfahrzeuge. Seitenbandeinheiten einer Dreibandkonfiguration können relativ schmal (so dass die Räder aufgestellt werden können) und länger als ein Kraftfahrzeug sein. Eine Mittenbandeinheit kann länger als ein zu prüfendes Kraftfahrzeug sein und schmal genug, dass die Räder rechts und links über die Breite/Seitenkanten überstehen. Radbandeinheiten einer Fünfbandkonfiguration können relativ kompakt sein, so dass ein Rad eines zu prüfenden Kraftfahrzeuges darauf abstellbar ist. Bevorzugt kann die Dreibandkonfiguration eine Einbandkonfiguration nachbilden, wobei die beiden Seitenbänder und das Mittenband zusammen die technische Funktion des einzelnen Bandes einer Einbandkonfiguration übernehmen können. Vorteilhaft ist bei einer Dreibandkonfiguration, dass die Seitenbandeinheiten jeweils weniger wiegen als eine Einzelbandeinheit, so dass die Seitenbandeinheiten mit weniger Aufwand bewegt bzw. ein- und ausgebaut werden können.

Ferner kann der Prüfstand einen Schlitten zur Aufnahme von zumindest einer Bandeinheit aufweisen. Besonders bevorzugt kann der Schlitten eine Bandeinheit einer Einband- oder Dreibandkonfiguration aufnehmen bzw. lagern. Dies soll insbesondere bedeuten, dass die entsprechende Bandeinheit auf dem Schlitten aufgestellt werden kann. Ganz besonders bevorzugt kann auf eine weitere Befestigung der Bandeinheit auf dem Schlitten verzichtet werden (sie ist aber möglich), da die Bandeinheit bereits aufgrund der Gewichtskraft sicher auf dem Schlitten aufsteht. Falls eine Befestigung vorgesehen werden sollte, so werden insbesondere selbstausführende Befestigungsmöglichkeiten bevorzugt, wie z.B. formschlüssige Verbindungselemente, die ineinander eingreifen, wenn die Bandeinheit auf dem Schlitten aufgestellt wird.

Der Schlitten kann bevorzugt in X- und/oder Y-Richtung relativ bewegbar zum Prüfstandrahmen gelagert sein. Dies kann bevorzugt mittels eines Schwimmlagers erreicht werden, auf dem derSchlitten gelagert sein kann. Ein solches Schwimmlager kann Kräfte in Z-Richtung in eine Lagerbasis ableiten, z.B. in ein Fundament, den Prüfstandrahmen oder dgl. - je nachdem, wo das Schwimmlager aufsteht. Das Schwimmlager kann ferner eine möglichst reibungsfreie Bewegung in die anderen Raumrichtungen, insbesondere die X- und Y-Richtung erlauben, wobei durch konstruktive Maßnahmen auch eine Bewegung in eine der beiden vorgenannten Richtungen eingeschränkt oder unterbunden sein kann. Die Schwimmlager können beispielsweise Gleitlager, Fluidlager und/oder Rollenlager umfassen.

Die relative Bewegung, die der Schlitten gegenüber dem Prüfstandrahmen ausführen können kann, kann bevorzugt eine Verschiebung sein. Besonders bevorzugt kann der Schlitten in eine der X- und/oder Y-Richtung über einen minimalen elastischen Federweg relativ bewegbar zum Prüfstandrahmen gelagert sein. Der minimale Federweg kann besonders bevorzugt der Federweg eines Krafterfassungsmittels sein, dass entlang der entsprechenden Richtung zwischen Prüfstandrahmen und Schlitten angeordnet sein kann, um darüber übertragene Kräfte erfassen zu können.

Mit anderen Worten kann der möglichst reibungsfrei gelagerte Schlitten verwendet werden, um das Gewicht einer Einbandeinheit einer Einbandkonfiguration oder von Seitenbänder bzw. Seitenbandeinheiten einer Dreiband-Anlage aufzunehmen. Der Schlitten ist weitestgehend reibungsfrei, d.h. schwimmend, (in X- und Y-Richtung) gelagert.

Weiterhin ist es vorteilhaft, dass der Schlitten jederzeit in dem Prüfstand verbleiben kann. Der Schlitten kann ermöglichen, dass die Dreibandseitenbandeinheiten und die Einbandeinheit nicht mit ihrem Gewicht auf der Wägeplattform aufgestellt werden müssen, was zu einer verbesserten Messgenauigkeit führt. In der Fünfbandkonfiguration kann der Schlitten in der Anlage belassen werden, so dass der Umbau weniger Zeit und Aufwand beansprucht.

Zusammenfassend weist der Windkanalprüfstand sozusagen (zumindest) eine 3-in-1-Konfiguration auf, d.h. eine Windkanalwaage, die mit geringem zeitlichem und baulichem Aufwand bspw. von einem Fünfband- in einen Dreiband- oder Einbandprüfstand oder umgekehrt umgerüstet werden kann. Der Schlitten erlaubt es dabei, die Gewichtskraft zumindest der Einbandbandeinheit in der Einbandkonfiguration und zumindest die der Seitenbandeinheiten in der Dreibandkonfiguration aufzunehmen und abseits der Wägeplattform abzuleiten. Gleichzeitig wird eine kraftmäßige Kopplung (abgesehen von Kräften in Z-Richtung) mit der Wägeplattform ermöglicht, so dass Kräfte in eine vorbestimmte bzw. gewünschte Richtung auf die Wägeplattform leitbar/abstützbar sind. Das Aufstellen der Einbandeinheit oder der Seitenbandeinheiten auf dem Rahmen kann mit relativ geringem Montageaufwand erfolgen, so dass ein Wechsel der Konfigurationen erleichtert und beschleunigt werden kann.

Ferner kann der Schlitten mit der Wägeplattform derart in X- und/oder Y-Richtung (starr) gekoppelt sein, dass eine Relativbewegung zwischen dem Schlitten und der Wägeplattform in der zugehörigen Richtung unterbunden (bzw. starr) sein kann. Hier soll zugehörige Richtung bedeuten, dass wenn beispielsweise eine (starre) Kopplung in X-Richtung vorliegt, eine Relativbewegung in X-Richtung ausgeschlossen ist, d.h. die beiden Einheiten, Wägeplattform und Schlitten, bewegen sich dann in die X-Richtung im Verbund. Wird gar keine Kopplung oder eine elastische Kopplung eingesetzt, so erlaubt die Lagerung des Schlittens bevorzugt eine relative Bewegung in X- und Y-Richtung.

Eine oben erwähnte (starre) Kopplung kann beispielsweise mit einer Verbindungseinrichtung erreicht werden, die die Wägeplattform und den Schlitten miteinander koppeln kann. Besonders bevorzugt kann die Verbindungseinrichtung die beiden Komponenten möglichst reibungsfrei miteinander koppeln.

Wird z.B. eine Kopplung in Y-Richtung, die besonders bevorzugt sein kann, vorgenommen, so können beispielsweise Führungen, Gleitlager und/oder Rollenlager an Seitenteile des Schlittens und der Wägeplattform angeordnet sein, die ein relatives Bewegen der beiden Komponenten in Y-Richtung unterbinden, aber ein möglichst reibungsfreies Bewegen der Wägeplattform relativ zum Schlitten bzw. des Schlittens zur Wägeplattform in X-Richtung zulassen. In diesem Fall kann, mit anderen Worten, der Schlitten bevorzugt weitestgehend reibungsfrei, d.h. schwimmend, gelagert sein: in Z-Richtung steht der Schlitten auf einem Lager auf und überträgt Kräfte in Z-Richtung in das Lager; in Y-Richtung ist der Schlitten mit der Wägeplattform verbunden/(starr) gekoppelt. In X-Richtung können sich der Schlitten und die darauf befindlichen Bandeinheit(en) frei oder elastisch (relativ zur Wägeplattform) bewegen. Die X-Richtung kann bspw. über ein zusätzliches Messmittel an der Wägeplattform befestigt sein, dass weiter unten beschrieben werden wird und das z.B. Ventilationsverluste, Rollreibverluste und dgl. erfassen kann. Versorgungsleitungen für Hydraulik, Strom, Wasser und dgl. können bevorzugt auf dem gelagerten Schlitten angeschraubt bleiben. Die Bandeinheit(en) können beim Aufsetzen auf den Schlitten alleine durch deren Gewichtskraft mit den Medien(-zugängen) verbunden werden.

Weitere Kopplungsmittel bzw. Verbindungseinrichtungen können Führungsstangen oder Luftlager aufweisen. Ferner können auch hydrostatische und/oder pneumatische Lager vorgesehen sein. Hydrostatisches Lager sind beispielsweise alle Lagertypen, die mittels Öl- oder Wasserdruck eine im Wesentlichen reibungsfreie Lagerung ermöglichen. Pneumatische Lager umfassen z.B. Luftdrucklager. Ein Führungszapfen (-kolben, -stange oder -mittel) kann verwendet werden, der reibungsfrei in einer Führungsaufnahme gleitet und z.B. hydraulisch oder pneumatisch in Z-Richtung positioniert werden kann. Die Führungsaufnahme kann je nach Form des Führungszapfens und je nach geforderter Kraftübertragungsrichtung gestaltet sein. Bei einem im Wesentlichen zylindrischen Führungszapfen und einer gewünschten Kraftübertragung zwischen Bandeinheit bzw. Schlitten und Plattform in X- und Y-Richtung (z.B. starre X- und Y-Kopplung) kann die Führungsaufnahme bevorzugt im Wesentlichen eine zylindrische Bohrung oder Aussparung sein.

Weiterhin kann die (starre) Kopplung bewirken, dass der gekoppelte Verbund aus Schlitten und Wägeplattform (globale) Kräfte auf die Prüfstandplattform überträgt. So kann bei einer (starren) Y-Kopplung eine relative Bewegung des genannten Verbundes zu der Prüfstandplattform mittels Krafterfassungsmittel(n) detektiert und die übertragene Kraft erfasst werden. Wird eine Relativbewegung zwischen Wägeplattform und Schlitten zugelassen, so kann mittels eines Krafterfassungsmittels eine (Relativ- oder innere) Kraft sichtbar gemacht werden, die bei einer starren Kopplung als innere Kraft nicht anzeigbar wäre. Beispielsweise kann somit ein Aufbau mit starrer Y-Kopplung und zusätzlichem Störkraft-Erfassungsmittel in der X-Richtung dazu geeignet sein, neben den "globalen" X-Kräften auch X-by-Radkräfte zu erfassen bzw. zu visualisieren. X-by-Radkräfte können Ventilations- oder Radreibungskraftverluste an den Rädern des Kraftfahrzeuges umfassen.

Der relativ-beweglich gelagerte Schlitten kann somit ermöglichen, dass große Massen der Bandeinheiten nicht direkt auf der Wägeplattform aufstehen, so dass die Messgenauigkeit des Prüfstandes erhöht wird und die Eigenfrequenzen nicht niedriger ausfallen. Zudem können innere Kräfte visualisiert, sozusagen freigeschnitten, werden und ein schneller Wechsel von Bandeinheiten/Konfigurationen ermöglicht werden. Der schnelle Wechsel wird u.a. dadurch ermöglicht, dass die Bandeinheiten direkt auf dem Schlitten aufstellbar sind und auf eine weitere Befestigung verzichtet werden kann.

In einer Einbandkonfiguration kann eine Einbandbandeinheit auf dem Schlitten angeordnet werden bzw. sein. Einbandeinheiten weisen besonders große Massen auf, die aufgrund der vorliegenden Erfindung mit ihrer Gewichtskraft nicht mehr auf der Wägeplattform aufstehen, wie dies bei bekannten Windkanalwaagen üblich ist.

In einer Dreibandkonfiguration können zumindest zwei Seitenbandeinheiten auf dem Schlitten angeordnet werden bzw. sein, die ebenfalls relativ große Massen aufweisen. Zusätzlich kann optional auch die Mittenbandeinheit einer Dreibandkonfiguration auf dem Schlitten aufgestellt sein.

In der Drei- oder Fünfbandkonfiguration kann eine Mittenbandeinheit zwischen Radbandeinheiten der Fünfbandkonfiguration oder Seitenbandeinheiten der Dreibandkonfiguration vorgesehen sein. Die Radbandeinheiten bzw. Seitenbandeinheiten sind üblicherweise dafür vorgesehen, die Räder des zu prüfenden Kraftfahrzeuges darauf abzustellen. Die Mittenbandeinheit kann auf dem Schlitten angeordnet werden, insbesondere im Falle der Dreibandkonfiguration. Ferner kann die Mittenbandeinheit auch ortsfest gelagert sein. Ortsfest soll hier bedeuten, dass die Lagerung in alle Raumrichtungen fest ist, d.h. keine Relativbewegung/Bewegung in eine Richtung möglich ist. Ortsfest kann in diesem Zusammenhang bedeuten, dass die Mittenbandeinheit auf einem Fundament eines Windkanals/Prüfstandes aufstehen kann oder dass die Mittenbandeinheit auf dem Prüfstandrahmen angeordnet sein kann. Der Prüfstandrahmen kann zu einem Fundament drehbar gelagert sein, die Mittenbandeinheit wäre in diesem Fall lediglich zum Prüfstandrahmen ortsfest. Die ortsfeste Lagerung hat den Vorteil, dass keine aerodynamischen Kräfte in die Wägeplattform oder den Schlitten eingeleitet werden, d.h. eine kraftmäßige Entkopplung vorliegt.

Die Mittenbandeinheit kann auch im Falle der 5-Bandanlage auf dem Schlitten aufgestellt werden/sein.

Der Schlitten kann in Z-Richtung Kräfte in eine Umgebung ableiten und in X- und Y-Richtung gleitend gelagert sein. Es kann beispielsweise ein (oder auch mehrere) oben beschriebenes Schwimmlager zur Lagerung des Schlittens herangezogen werden, das beispielsweise auf dem Fundament des Prüfstandes oder dem Prüfstandrahmen angeordnet sein kann. Mit anderen Worten kann der Begriff "Umgebung" bedeuten, dass der Schlitten Z-Kräfte, insbesondere Gewichtskräfte, aufnimmt und nicht in die Wägeplattform überträgt. Diese Lagerung hat den Vorteil, dass die für die Prüfung nicht beachtlichen Massen der Bandeinheiten bzw. eines Teils der Bandeinheiten erst gar nicht mitgemessen werden, so dass diese Massen, die groß sein können, auch nicht die Messgenauigkeit reduzieren können.

Die Wägeplattform kann zumindest zwei Teilplattformen aufweisen, die (voneinander) trennbar sein können. Diese zumindest zwei Teilplattformen können in einer Fünfbandkonfiguration des Windkanalprüfstandes miteinander verbunden sein. In einer Dreiband- oder Einbandkonfiguration des Windkanalprüfstandes kann die erste (obere) Teilplattform von der zweiten (unteren) Teilplattform bevorzugt abgetrennt und bevorzugt aus dem Prüfstand entfernt sein.

Auf der ersten Teilplattform können zumindest eine Radbandeinheit und eine Befestigungseinrichtung für die Fünfbandkonfiguration, bevorzugt vorinstalliert, angeordnet sein. Besonders bevorzugt können bei einer Fünfbandkonfiguration vier Radbandeinheiten auf der ersten Teilplattform angeordnet sein. Eine Radbandeinheit ist im Vergleich, z.B. zu einer Einbandeinheit oder einer Mittenbandeinheit, im Wesentlichen kompakter aufgebaut und so dimensioniert, dass ein Rad eines Kraftfahrzeuges auf einem Obertrum abgestellt werden kann.

Die Umrüstung wird durch die teilbare und trennbare Wägeplattform noch weniger aufwendig und komplex. Die (bevorzugt obere) erste Teilplattform hält bevorzugt alle notwendigen Aufbauten, wie z.B. Radbandeinheiten und Befestigungseinrichtung(en), bereits vorinstalliert auf einer Oberfläche bereit, so dass diese Baugruppen alle zusammen (gleichzeitig) mit dem Einbau der ersten Teilplattform montiert werden können.

Besonders bevorzugt ist die erste Teilplattform mit den darauf angeordneten Aufbauten auch bereits vorgewogen, so dass dieser Gewichtswert bereits vorbekannt ist. Die zweite Teilplattform wird insbesondere alleine (ohne erste Teilplattform) verwendet, wenn eine Einband- oder Dreibandkonfiguration verwendet werden soll. In der Einbandkonfiguration wird eine große Einbandeinheit mit allen dazugehörigen Rahmenteilen vormontiert auf den oberen Teil des Rahmens des Prüfstandes aufgesetzt und bevorzugt nur aufgrund der Gewichtskraft in Position gehalten. Entsprechendes gilt für die Seitenbandeinheiten der Dreibandkonfiguration. Mit anderen Worten erlaubt die Teilbarkeit der Wägeplattform, dass eine Umrüstung mit im Wesentlichen zwei (Haupt-)Schritten durchführbar ist: (De-)montieren der Einbandeinheit/Dreibandeinheiten und (De-)montieren der ersten Teilplattform mit den vormontierten Aufbauten. Dies kann innerhalb kurzer Zeit und ohne komplexe Eingriffe durch Monteure durchgeführt werden.

Die zumindest eine Radbandeinheit und Befestigungseinrichtung(en) können verschiebbar und besonders bevorzugt arrtierbar auf der ersten Teilplattform gelagert sein. Mit anderen Worten können die Radbandeinheit(en) und/oder die Halteeinrichtung(en) verschiebbar bzw. gleitend (möglichst reibungsfrei/-arm) auf der ersten Teilplattform gelagert sein, so dass diese an die Dimensionen des Kraftfahrzeuges mittels Verschieben schnell und wenig aufwendig angepasst werden können. Eine Arretierbarkeit erlaubt es, dass eine Fixierung in der gewünschten Position möglich ist.

Die Wägeplattform kann zumindest zwei Teilplattformen aufweisen, die trennbar gelagert sein können. Auf der ersten Teilplattform kann zumindest eine Radbandeinheit und eine Befestigungseinrichtung der Fünfbandkonfiguration vorinstalliert angeordnet sind. Die zumindest zwei Teilplattformen können in einer Fünfbandkonfiguration des Windkanalprüfstandes miteinander verbunden sein. Eine erste Teilplattform kann in einer Dreiband- oder Einbandkonfiguration des Windkanalprüfstandes von der zweiten Teilplattform abgetrennt und besonders bevorzugt aus dem Prüfstand entfernt sein. Dieser Aufbau erlaubt, wie oben erläutert wurde, ein besonders schnelles Umrüsten, da die obere erste Teilplattform bereits alle (zusätzlichen, alternativen) notwendigen Komponenten für eine Fünfbandkonfiguration halten kann. Besonders schnell und mit besonders wenig Aufwand lässt sich somit zwischen der Einband- und Fünfbandkonfiguration wechseln, d.h. zwischen den zwei meistverwendeten Konfigurationen im Hinblick auf Rennsport- und Personenkraftwagen.

Ferner kann der Windkanalprüfstand zumindest eine Befestigungseinrichtung aufweisen. Diese kann dazu geeignet sein, ein Kraftfahrzeug in/an einer vorbestimmten Position auf dem Laufband festzuhalten. Bei einer Fünfbandkonfiguration des Windkanalprüfstandes kann die Befestigungseinrichtung auf einer ersten Teilplattform der Wägeplattform angeordnet sein. Bei einer Dreiband- oder Einbandkonfiguration des Windkanalprüfstandes kann die Befestigungseinrichtung auf einer zweiten Teilplattform der Wägeplattform angeordnet sein.

Die Fixierung des Kraftfahrzeuges erlaubt ein sicheres Festhalten des Kraftfahrzeuges an einer vordefinierten Position, so dass keine Fehlmessungen oder parasitären Kräfte dadurch erzeugt werden, dass das Kraftfahrzeug diese Position bspw. unter Krafteinwirkung verlässt bzw. davon abweicht. Mit anderen Worten bedeutet "Festhalten" des Fahrzeugs auf dem Laufband bedeutet, dass das Fahrzeug während der Aerodynamikversuche oder anderer Versuche seine vorbestimmte Position auf dem Laufband beibehält, d.h. nicht von dieser Position abweicht.

Die Befestigungseinrichtung (Restraintsystem) der Einband- und Dreibandkonfiguration kann beispielsweise aus zwei Befestigungsstützen bzw. - Stangen (erste Befestigungsmittel) bestehen, die jeweils seitlich des Laufbandes angeordnet sein können. Ferner kann sie Haltemittel (zweite Befestigungsmittel), wie z.B. Seile, Bänder, Gurte, Stangen und/oder Kombinationen davon, umfassen, die an den Befestigungsstützen angeordnet sein können und weiterhin bspw. mittels Aufnahmen an korrespondierenden Aufnahmen am Kraftfahrzeugrahmen angeordnet werden können. Eine (feste) Anordnung der Befestigungseinrichtung auf der Plattform kann beispielsweise kraft- und/oder formschlüssig realisiert sein.

Insbesondere und besonders bevorzugt kann die Befestigungseinrichtung auf der zweiten Teilplattform demontierbar bzw. lösbar mit dieser verbunden sein, so dass die Befestigungseinrichtung beim Umrüsten auf eine Fünfbandkonfiguration entfernt werden kann, falls dies aus platzgründen gewünscht sein sollte.

Die erste und zweite Teilplattform können zumindest eine vordefinierte (mechanische oder Kraft-)Kopplungsschnittstelle umfassen, wobei über diese Kopplungsschnittstelle zumindest X-, Y- und Z-Kräfte zwischen der ersten und zweiten Teilplattform übertragbar sein können. Ferner können an der einen oder den mehreren Kopplungsschnittstellen auch Anschlüsse für die Übertragung fluidischer Medien und/oder elektrischer Ströme vorgesehen sein. Es können ferner auch gesonderte Kopplungsschnittstellen für fluidische Medien und/oder elektrischer Ströme vorgesehen sein.

Die (Kraft-)Kopplungsschnittstelle(n) können im einfachsten Fall eine vordefinierte ebene Flächen sein, die jeweils an zwei gegenüberliegenden Oberflächen der beiden Teilplattformen angeordnet sein können; und zwar so, dass die im montierten Zustand aufeinander aufliegen. Die Kupplungsschnittstellen können auch Füße, Vorstehungen, Zapfen oder dgl. umfassen, die auf einer gegenüberliegenden Fläche oder Vertiefung der anderen Teilplattform zum Liegen kommen oder darin eingreifen können. Zusätzlich können bevorzugt auch Ausrichteeinrichtungen vorgesehen sein, die ein selbsttätiges Ausrichten der beiden Plattformen zueinander bewirken, wenn diese miteinander gekoppelt werden/verbunden werden. Dies können z.B. kleine Rollen sein, die an vordefinierten Ebenen der anderen Teilplattform abrollen und dabei eine Ausrichtung bewirken. Die Kraftübertragungsschnittstellen können zudem (selbsttätige) Einrastelemente aufweisen, die beim Ineinandergreifen verrasten - z.B. bei einer Zapfen und Vertiefungslösung.

Die Schnittstelle(n) bzw. Anschlüsse für die fluidischen Medien können bevorzugt selbsttätige Schnellkupplungen aufweisen. Für die Übertragung von elektrischem Strom können Kopplungsschnittstelle(n) bzw. Anschlüsse selbstausrichtend gleitend gelagert sein, d.h. die Steckerelemente können beispielsweise verschiebbar gelagert sein, so dass diese aufgrund der Formgebung von Leitflächen oder dgl. selbstausrichtend aufeinanderzugleiten können.

Ferner kann das Krafterfassungsmittel, das die Wägeplattform und den Prüfstandrahmen verbinden kann, an der zweiten Teilplattform angeordnet sein. Bevorzugt sind zumindest Krafterfassungsmittel vorgesehen, mit denen Z-Kräfte erfassbar sind. Diese erlauben insbesondere die Erfassung von Gewichtskräften und Auftriebs- und Abtriebskräften, die während der Tests auftreten bzw. variieren. Besonders bevorzugt können weitere Krafterfassungsmittel zwischen dem Prüfstandrahmen und der zweiten Teilplattform vorgesehen sein, mit denen X- und/oder Y-Kräfte erfassbar sein können, so dass z.B. auch Seitenkräfte darstellbar sind. Die Anbringung an der zweiten Teilplattform hat den Vorteil, dass bei einer Umrüstung der Austausch oder das Umlegen der Krafterfassungsmittel eingespart werden kann, was das Umrüsten weiter beschleunigt.

Ein X-Kraftmessmittel kann derart angeordnet sein, dass eine Kraft in X-Richtung zwischen der Wägeplattform und dem Prüfstandrahmen erfassbar ist. Ein Y-Kraftmessmittel kann derart angeordnet sein, dass eine Kraft in Y-Richtung zwischen der Wägeplattform und dem Prüfstandrahmen erfassbar ist, und ein Z-Kraftmessmittel kann derart angeordnet sein, dass eine Kraft in Z-Richtung zwischen der Wägeplattform und dem Prüfstandrahmen erfassbar ist.

Die Kraftmessmittel können beispielsweise eine kleine Relativbewegung zwischen der Wägeplattform und dem Prüfstandrahmen als Wegänderung erfassen und als Kraftwert ausgeben. Somit wird die Erfassung von Kräften separat für jede Messrichtung ermöglicht. Die Kraftwerte können z.B. an eine Auswerteeinheit - z.B.-ein Computer - weitergeleitet werden. Die Kraftmessmittel (oder Krafterfassungsmittel) können z.B. Kraftmessdosen sein, die auf Basis von Dehnmessstreifen, piezoelektisch oder piezoresistiv eine Wegänderung, Dehnung, Stauchung, Spannung und/oder Druck in ein elektrisches Kraftsignal umwandeln. Die Kraftmessmittel können jeweils zwischen zwei Knickstäben angeordnet sein, so dass lediglich Kräfte normal zur Knickstabrichtung auf die Kraftmessmittel geleitet werden. Die Knickstäbe können z.B. Ausformungen/Kerbungen aufweisen, die beispielsweise um 90° zueinander verdreht angeordnet sind, um im Wesentlichen nur Kräfte in Normalenrichtung zur Stabachse auf die Kraftmessdose zu leiten.

Weiter kann ein ein Störkraft-Erfassungsmittel zwischen dem Schlitten und der zweiten Teilplattform angeordnet sein, insbesondere zur Erfassung von X- und/oder Y-Kräften. Das Störkraft-Erfassungsmittel kann zwischen dem Schlitten und der Wägeplattform derart angeordnet sein, dass eine Kraft zwischen der Wägeplattform und dem Schlitten in X-Richtung erfassbar sein kann, so dass ein Ventilationsverlust, ein Rollreibverlust, aerodynamische Verluste zwischen Laufband und Kraftfahrzeug und dgl. separat erfassbar sind. Die Verluste können beispielsweise durch eine Erfassung einer kleinen Relativbewegung zwischen dem Schlitten und der Wägeplattform isoliert bzw. separat ausgewertet bzw. erfasst werden, so dass die Messgenauigkeit der gesamten Windkanalwaage weiter erhöht werden kann. Das Störkraft-Erfassungsmittel ist bevorzugt zusätzlich zu den X-, Y- und/oder Z-Kraftmessmitteln an der Wägeplattform angeordnet.

Unterhalb eines Obertrums des zumindest einen Laufbandes einer Bandeinheit kann bevorzugt ein Lager angeordnet sein, wobei das Lager ganz besonders bevorzugt ein Wiegepad sein kann. Das Wiegepad kann derart angeordnet sein, dass das Kraftfahrzeug, wenn es auf dem Laufband fixiert ist, mit den Fahrzeugrädern oberhalb des zumindest einen Wiegepads auf dem Laufband aufsteht. Ferner kann das zumindest eine Wiegepad Kräfte in Z-Richtung, insbesondere die Gewichtskraft des Kraftfahrzeuges und Auf- und/oder Abtriebskräfte, erfassen. Die optionalen Wiegepads, die in der Regel an eine Messsensorik angeschlossen sein können, können folglich beispielsweise Kräfte in Z-Richtung, z.B. die Gewichtskraft des Kraftfahrzeuges und Auf- bzw. Abtriebskräfte, erfassen.

Durch die Wiegepads werden die Radaufstandskräfte erfasst und nach deren Aufsummierung die Summe der Z-Kräfte, d.h. Fahrzeuggewichtskraft, Auftriebs- und Abtriebskräfte und parasitäre Kräfte in Z-Richtung. Weiterhin können durch ein Erfassen einer Auslenkung der Wiegepads aus der Nulllage zusätzliche Momente um die X- und/oder Y-Achse erfasst werden. Wiegepad bezeichnet hier jegliche Messeinrichtung, die zum Messen von Z-Kräften herangezogen werden kann, insbesondere für Durchbandmessungen. Bevorzugt wird je Fahrzeugrad je ein Wiegepad vorgesehen, d.h. in der Regel sind vier Wiegepads vorgesehen.

Die Befestigungseinrichtung kann das Kraftfahrzeug auf dem Laufband in einer festen Position, insbesondere oberhalb des zumindest einen Wiegepads festhalten. Die Befestigungseinrichtung kann so ausgeführt sein, dass Kräfte in X-, Y- und/oder Z-Richtung vom Kraftfahrzeug über die Befestigungseinrichtung auf die Wägeplattform übertragbar sein können. Besonders bevorzugt kann die Windkanalwaage mittels eines Z-Kraftmessmittels parasitäre Z-Kräfte separat erfassen, die über die Befestigungseinrichtung und die Wägeplattform an die Z-Kraftmessmittel übertragen werden. Dies ermöglicht, dass parasitäre Z-Kräfte, die in den Messwerten der Wiegepads enthalten sind, gesondert erfasst werden können, nämlich mit den Z-Kraftmessmitteln.

Weiterhin umfasst die Erfindung Verfahren zum Umrüsten eines Windkanalprüfstandes gemäß zumindest einem der voranstehend erläuterten Aspekte und Beispiele. Eine Umrüstung von einer Drei- oder Einbandkonfiguration auf eine Fünfbandkonfiguration kann zunächst den Schritt umfassen, dass die Einbandeinheit einer Einbandkonfiguration bzw. die Seitenbandeinheiten (und ggf. die Mittenbandeinheit) einer Dreibandkonfiguration von dem Schlitten abgehoben und entfernt werden. Danach kann die erste Teilplattform mit vorinstallierten Radbandeinheiten und Befestigungseinrichtung auf (der Kopplungsschnittstelle) der zweiten Teilplattform aufgestellt werden. Weiter kann die Mittenbandeinheit zwischen den Radbandeinheiten positioniert werden. Die Radbandeinheiten können auch einzeln auf einer nicht teilbaren Wägeplattform aufgestellt werden.

Für eine Umrüstung von einer Fünfbandkonfiguration auf eine Drei- oder Einbandkonfiguration kann die erste Teilplattform mit den vorinstallierten Radbandeinheiten und der Befestigungseinrichtung von (der Kopplungsschnittstelle) der zweiten Teilplattform angehoben und entfernt werden. Die Einbandeinheit kann danach auf dem oberen Rahmenelement angeordnet werden. Im Falle einer Dreibandkonfiguration können das Mittenband und die Seitenbänder anstatt der Einbandeinheit aufgestellt werden.

Die Umrüstung gemäß den vorbeschriebenen Verfahren kann ohne größere Eingriffe von Montagepersonal erfolgen und lässt sich schnell durchführen, so dass sich erhebliche Kosteneinsparungen seitens der Windkanalnutzer erzielen lassen.

Zusammenfassend haben der Windkanalprüfstand und die beschriebenen Verfahren zur Umrüstung erhebliche Vorteile im Hinblick auf die Vielseitigkeit und Nutzbarkeit des Prüfstandes, da dieser schnell und wenig aufwendig in verschiedene Konfigurationen für verschiedene Testzwecke transformierbar ist. Ferner kann der erfindungsgemäße Windkanalprüfstand den Vorteil haben, dass eine erhöhte Messgenauigkeit erreicht werden kann. Parasitäre Z-Kräfte können insbesondere in der Dreiband- und Einbandkonfiguration separat erfassbar sein und die beträchtliche Gewichtskraft der Windkanalwaage auf gesonderte Lagern abgeleitet werden, d.h. nicht über die Wägeplattform. Die Wägeplattform kann relativ bewegbar bzw. mittels Krafterfassungsmitteln zu dem Prüfstandrahmen elastisch abgestützt gelagert sein. Die Gewichtskraft der Bandeinheit und eines darauf aufstehenden (Kraft-)Fahrzeugs kann gegen den Schlitten abgestützt werden. Weiterhin kann die Messgenauigkeit, insbesondere in der Dreiband- und Einbandkonfiguration, dadurch erhöht werden, dass parasitäre Kräfte in Z-Richtung separat mittels den Z-Kraftmessmitteln, die zwischen der Wägeplattform und dem Prüfstandrahmen angeordnet sein können, erfasst werden können. Der Begriff Bandeinheitsrahmen kann beispielsweise alle Bauteile, die das Grundgerüst bilden, an dem z.B. die Rollen der Bandeinheit und das Laufband angeordnet sein können, umfassen. Der Bandeinheitsrahmen kann einteilig oder mehrteilig sein. Typischerweise kann jeweils eine Bandeinheit im Wesentlichen einen Bandeinheitsrahmen, ein Laufband und zwei Rollen umfassen. Es können weitere Bandeinheitskomponenten hinzukommen, wie z.B. ein Antriebsmittel zum Antreiben des Laufbandes, Hydrauliksysteme, Elektrik, etc, die hier nicht weiter erläutert werden.

Die hier dargelegte Vorrichtung und das dazugehörige werden im Folgenden exemplarisch mit Bezug auf die beigefügten, schematischen Zeichnungen beschrieben. Es zeigen
Fig. 1 eine Draufsicht einer Windkanalwaage in Fünfbandkonfiguration,
Fig. 2 eine Seitenansicht einer Windkanalwaage- - in Fünfbandkonfiguration,
Fig. 3 eine Draufsicht einer Windkanalwaage in Dreibandkonfiguration,
Fig. 4 eine Seitenansicht einer Windkanalwaage in Dreibandkonfiguration,
Fig. 5 eine Draufsicht einer Windkanalwaage in Einbandkonfiguration und
Fig. 6 eine Seitenansicht einer Windkanalwaage in Einbandkonfiguration.

Im Folgenden werden verschiedene Beispiele detailliert und unter Bezugnahme auf die Figuren beschrieben. Gleiche bzw. ähnliche Elemente in den Figuren werden hierbei mit gleichen Bezugszeichen bezeichnet. Die vorliegende Vorrichtung und das Verfahren sind jedoch nicht auf die beschriebenen Kombinationen von Merkmalen begrenzt. Vielmehr sollen auch weitere Modifikationen und Kombinationen von Merkmalen verschiedener Beispiele im Rahmen des Schutzumfangs der unabhängigen Ansprüche umfasst sein.

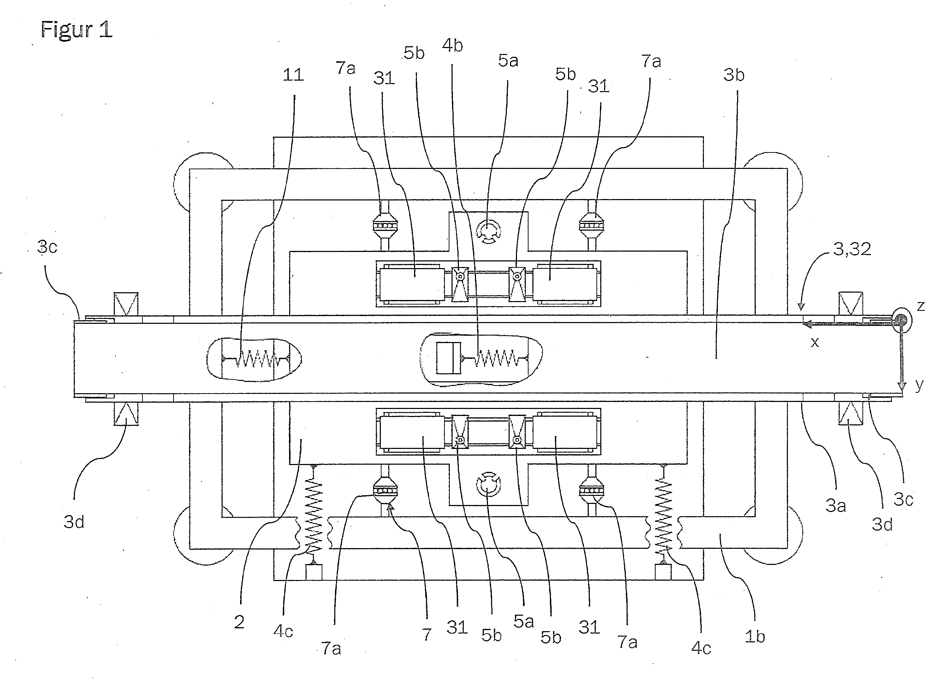

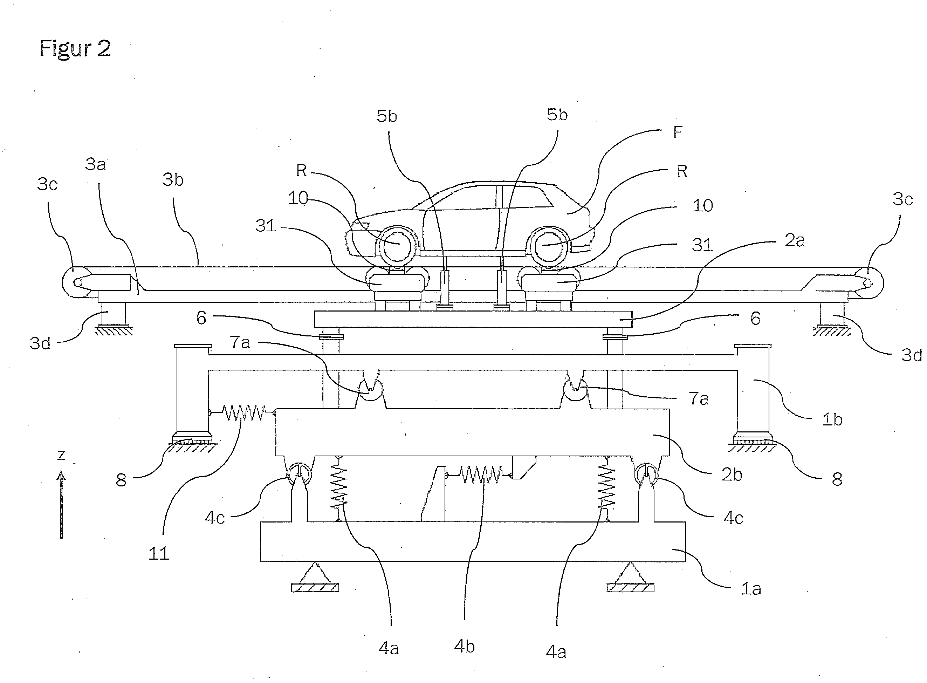

In den Figuren 1 und 2 ist die Konstellation bzw. Konfiguration einer Fünfbandausführung in der Draufsicht gezeigt. Auf dem (optional drehbaren) Prüfstandrahmen 1a (Figur 2) ist eine Wägeplattform 2 montiert, die mit Krafterfassungsmitteln 4 Kräfte in X-, Y-, Z-Richtung erfasst, wobei die Z-Krafterfassungsmittel 4a die Wägeplattform 2 auch lagern können. Direkt an der Wägeplattform 2, genauer an einer oberen ersten Teilplattform 2a, sind Radbandeinheiten 31 sowie Schwellerstützen/Rockerpanel 5b einer Befestigungseinrichtung 5 vormontiert.

Die vormontierte Befestigungseinrichtung 5 sowie die vier Radbandeinheiten 31 zum Abstellen jeweils eines Rades R eines Kraftfahrzeuges F erlauben es, dass die obere Plattform 2a, die trennbar mit der zweiten, unteren Teilplattform 2b verbunden ist, schnell komplett installiert werden können. Es muss lediglich die erste Teilplattform 2a auf der unteren, zweiten Teilplattform 2b abgestellt werden. Dazu können optionale Kopplungsschnittstellen 6 vorgesehen sein, die ein definiertes und reproduzierbares Andocken der oberen, ersten Teilplattform 2a erlauben können.

Die Figur 2 zeigt diese Kopplungsschnittstellen 6 schematisch als Flansche. Bevorzugt wird keine weitere Befestigung mit Hilfsmitteln, wie z.B. Schrauben oder dgl., benötigt. Die beiden Teilplattformen 2a, 2b stehen aufgrund der Gewichtskraft sicher aufeinander. Es können jedoch unterstützend oder zur Erhöhung der Sicherheit insbesondere formschlüssige Aufbauten vorgesehen sein, die z.B. ein relatives Verrutschen verhindern. Hier könnten beispielsweise Dorne oder Formvorsprünge vorgesehen sein, die in korrespondierend geformte Aufnahmen eingreifen können.

Weiterhin ist die Wägeplattform 2 seitlich mit dem Prüfstandrahmen 1a über Y-Kraftmessmittel 4c verbunden (s. Figur 1), die an einem unteren Abschnitt der zweiten Teilplattform 2b angeordnet sind, wie insbesondere die Figur 2 zeigt. Eine (relative) Bewegung der Wägeplattform 2 in Y-Richtung wird somit von den Y-Krafterfassungsmitteln detektiert und die Kräfte in Y-Richtung können gemessen werden. Ebenso ist ein X-Krafterfassungsmittel 4b zwischen dem Prüfstandrahmen 1a und der Wägeplattform 2 angeordnet, dass entsprechend eine X-Kraft zwischen Wägeplattform 2 und dem Prüfstandrahmen 1a erfassen kann.

Die Plattform wird mittels Z-Kraftmessmitteln 4a - gezeigt sind lediglich zwei, jedoch werden besonders drei oder vier bevorzugt - in Richtung der Hochachse (Z-Richtung) im Prüfstandrahmen 1a gelagert. Erfasste Kräfte können z.B. mittels einer Auswerteeinheit (nicht gezeigt) dargestellt werden. Die Kräfte längs zur Fahrachse (X-Kräfte) werden mit dem zumindest einen X-Kraftmessmittel 4b erfasst. Die Kräfte quer zur Fahrachse (Y-Kräfte) werden mit zumindest einem, bevorzugt zwei, Y-Kraftmessmittel 4c erfasst/gemessen. Es können zwei Y- Kraftmessmittel 4c vorgesehen sein, die seitlich an der Plattform 2 (der zweiten Teilplattform 2b) angeordnet und in X-Richtung zueinander beabstandet sind. Das Gegenende der Y-Kraftmessmittel 4c ist fest mit dem Prüfstandrahmen 1a verbunden.

Schematisch sind in den Figuren alle Kraftmessmittel 4 als einfache Federelemente gezeigt. In der realen Anordnung werden bevorzugt Kraftmessdosen oder Dehnmessstreifen (bzw. in Kraftmessdosen integrierte Dehnmessstreifen) verwendet (andere Kraftmesseinrichtungen sind jedoch auch möglich), die mittig in einem bzw. zwischen zwei Knickstäben oder Säulen angeordnet sind. Eine alternative Befestigung bzw. Anordnung der Kraftmessmittel 4 ist selbstverständlich auch möglich.

Die Wägeplattform 2 ist beispielsweise ein Bauteil, das mittig in dem Prüfstandrahmen 1a angeordnet sein kann. Die in Figur 1 gezeigten Abstände zwischen der Wägeplattform 2 und dem Prüfstandrahmen 1a dienen der besseren Veranschaulichung, d.h. es können sehr viel kleinere oder größere Abstände vorgesehen sein. Die Formgebung der Wägeplattform 2 kann wie in Figur 1 gezeigt plattenartig mit im Wesentlichen rechteckiger Grundform sein. Eine komplexere Form der Wägeplattform 2 ist jedoch auch erfindungsgemäß möglich. Die Wägeplattform 2 muss nicht notwendigerweise plattenförmig gestaltet sein. Dies gilt auch für die beiden Teilelemente bzw. Teilplattformen 2a, 2b der Wägeplattform 2.

Die oben bereits erläuterte Befestigungseinrichtung 5, die arretiert auf der ersten Teilplattform 2a montiert ist, ist insbesondere dafür vorgesehen, das Kraftfahrzeug F sicher in der vorbestimmten Position auf dem Laufband 3b zu halten.

Die erste Teilplattform 2a ist fest mit der zweiten Teilplattform 2b verbunden, so dass Kräfte von dem Kraftfahrzeug F auf die Wägeplattform 2 geleitet werden können und dort mittels der oben beschriebenen Krafterfassungsmittel 4 erfasst werden können. Die feste Verbindung zwischen den beiden Teilplattformen resultiert insbesondere bereits aus der Gewichtskraft, mit der die erste Teilplattform 2a sicher auf der zweiten Teilplattform 2b aufsteht.

Ein in Figur 2 in der Seitenansicht gezeigter Schlitten 1b ist über ein zusätzliches Messmittel mit dem Referenzzeichen 11 an der Wägeplattform 2 angebunden. Der Schlitten 1b wird im Zusammenhang mit den nachfolgenden Figuren genauer erläutert werden.

Weiterhin zeigen beide Figuren 1 und 2 auch eine Mittenbandeinheit 32, die zwischen den Radbandeinheiten 31 angeordnet ist und ein langes Laufband 3b bereitstellt, das um die Rollen 3c der Mittenbandeinheit 32 abrollt. Dieses Mittenband simuliert die Fahrbahn des zu prüfenden Kraftfahrzeuges F, die zwischen den Rädern R abrollt. Die Rollen 3c der Mittenbandeinheit 32 sind in einem Bandeinheitsrahmen 3a aufgehängt bzw. gelagert.

Zudem zeigt die Figur 2, dass die Radbandeinheiten 31 Lager 10 für Räder R unterhalb der Laufbänder, d.h. unterhalb des Rades R, aufweisen können. Die Radbandeinheiten 31 können statt der konventionellen Lager 10 für Räder Rauch sogenannte Trapezlager aufweisen, die den Obertrum des jeweiligen Laufbandes 3b unterstützen.

Es sei hier angemerkt, dass die Figur 1 eine Fünfband-Anlage in der Draufsicht und mit zeichnungsbedingten Durchbrüchen zeigt. Die Durchbrüche sollen ermöglichen, dass die unter dem Laufband 3b angeordneten Krafterfassungsmittel, insbesondere 4b und 11, sichtbar sind. Selbstverständlich sind diese (zeichnerischen) Durchbrüche in der Realität nicht vorhanden.

Weiterhin sei im Hinblick auf Figur 1 angemerkt, dass eine einseitige Anordnung von Y-Kraftmessmitteln 4c gezeigt ist und diese bereits ausreichend sein kann, um eine genaue Messung vornehmen zu können. Ferner ist aus der schematischen Zeichnung ersichtlich, dass die Wägeplattform 2 seitlich (in Y-Richtung) jeweils zumindest soweit über die äußere seitliche Kante des/der Laufbänder 3b übersteht, dass auf den überstehenden Abschnitten Befestigungsstützen 5a einer Befestigungseinrichtung 5 der Einband- oder Dreibandkonfiguration Platz finden können bzw. herausstehen können.

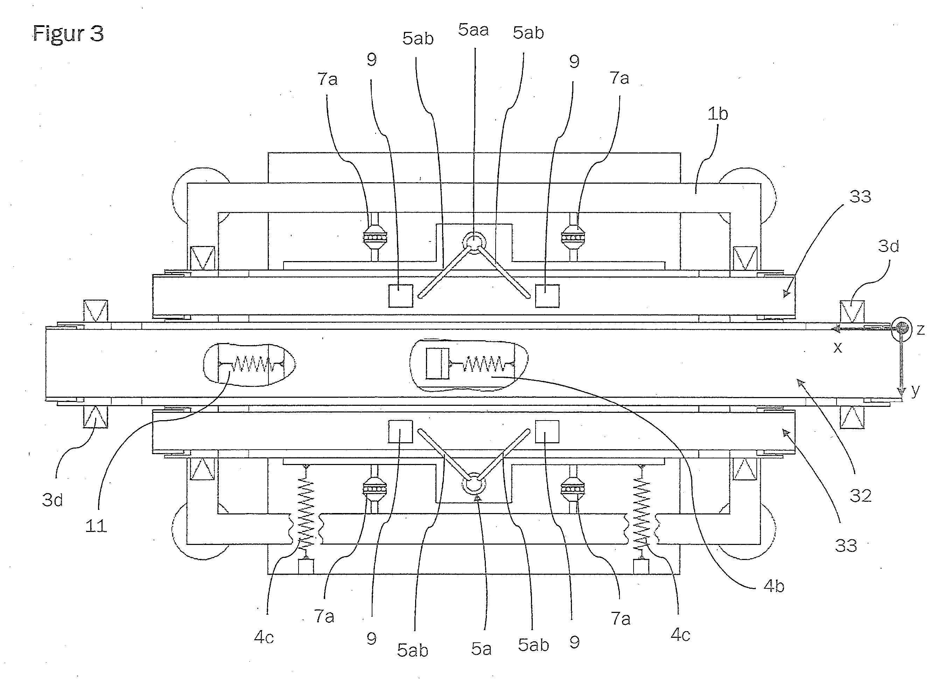

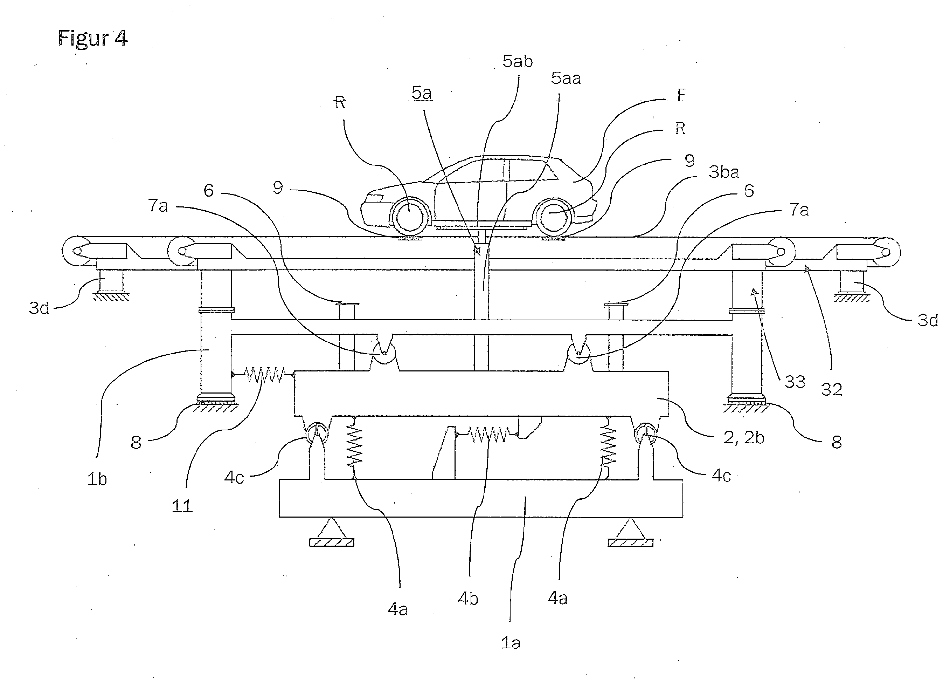

In den Figuren 3 und 4 ist eine Laufbandanordnung gezeigt, die ein sogenanntes "Single-Belt" mittels zweier Seitenlaufbänder 33 nachbilden kann. Mit anderen Worten zeigen die Figuren eine Dreibandkonfiguration. Bevorzugt sind, wie in Figur 4 gezeigt ist, nur die Seitenlaufbänder 33 mit dem Schlitten 1b verbunden. Das Mittenlaufband 32 ist ortsfest über die Lager 3d auf einem Fundament oder dem Rahmen 1a abgestützt. Möglich wäre es auch, dass alle drei Bandeinheiten 32, 33 auf dem Schlitten 1b gelagert werden.

Im Hinblick auf die Lagerungder unteren, zweiten Teilplattform 2b liegt bevorzugt kein Unterschied zu der vorbeschriebenen Fünfbandkonfiguration vor. Allerdings ist die erste Teilplattform 2a aus dem Prüfstand 1 entfernt worden, so dass die Kupplungsschnittstellen 6 unbesetzt bleiben können. Das Kraftfahrzeug F wird anstatt von Schwellerstützen 5b von einem Halter-/Restraintsystem 5a auf dem Laufband 3a festgehalten. Dieses weist die beiden gezeigten Befestigungsstützen 5aa auf, die in Z-Richtung bevorzugt senkrecht jeweils seitlich zu den Laufbändern 3b der Seitenbandeinheiten 33 (in hinsichtlich der X-Richtung bevorzugt mittiger Lage des Windkanalprüfstandes) auf der zweiten Teilplattform 2b fixiert sind. Die Befestigungsstützen 5aa sind (positions-)fest, aber bevorzugt lösbar, mit der Plattform 2 bzw. der zweiten Teilplattform 2b verbunden.

Weiterhin zeigen die Figuren 3 und 4, dass die in Z-Richtung oberen Enden der Befestigungsstützen 5aa über die Z-Höhe des Obertrums 3ba des Laufbandes 3b überstehen. Bevorzugt im überstehenden Endabschnitt der Befestigungsstützen 5aa ist zumindest ein zweites Befestigungsmittel 5ab befestigt. Das zweite Befestigungsmittel 5ab ist bevorzugt ein Seil, ein Gurt, eine sehr dünne Stange oder eine Anordnung aus verschiedenen Komponenten wie Seilen, Gurten, etc. und kann am Ende, das zum Fahrzeug F hin angeordnet ist, eine Aufnahme aufweisen. Bevorzugt sind zumindest für jede Fahrzeugseite (in Y-Richtung) zwei zweite Befestigungsmittel 5ab vorgesehen, die mittels Aufnahme an korrespondierende Aufnahmen am Kraftfahrzeug F angeordnet sind. Die zweiten Befestigungsmittel 5ab halten das Fahrzeug F in einer vorbestimmten Position auf dem (relativ zum) Laufband 3b fest. An den Seilen auftretende X-/Y-Kräfte können bevorzugt über die Seile ausgeleitet und als innere Kräfte wirken.

Werden die zweiten Befestigungsmittel 5ab beispielsweise nicht exakt in der Horizontalen geführt, so können sich parasitäre Z-Kräfte ergeben, die von zumindest einem Wiegepad 9 unterhalb des Obertrums 3ba des Laufbands 3b erfasst werden können. Weiterhin können diese parasitären Z-Kräfte auch gesondert/separat über die Befestigungseinrichtung 5a an die Z-Kraftmessmittel 4a geleitet werden. Dies ermöglicht eine Verrechnung/Korrektur der gemessenen Z-Kräfte an dem Wiegepad 9 und an den Z-Kraftmessmitteln 4a und damit eine erhöhte Messgenauigkeit.

Die Wiegepads 9 sind in Figur 3 unterhalb des Laufbandes 3b angeordnet und in der Figur mittels schematischer Quadrate gekennzeichnet. Die Wiegepads 9 erfassen eine Z-Kraft mittels Durchbandmessung.

Weiterhin zeigt die Figur 4, dass ein zusätzliches Kraftmessmittel 11 an der Wägeplattform 2 angebunden ist. Dieses ermöglicht die Separierung von aerodynamischen Störkräften, die u.a. von der mit dem Laufband 3b mitgerissenen Luft resultieren können, und an den Rädern auftretenden Kräften, wie z.B. Roll-, Walk- und/oder Ventilationsverluste, die an diesem Störkraft-Erfassungsmittel 11 gemessen werden. Die weiteren aerodynamischen Kräfte stehen weiterhin an den vorbeschriebenen Kraftmessmitteln 4 zur Verfügung. Konkret wird dargestellt, dass an einem in X-Richtung vorderen Ende (jedoch ist auch eine andere Position möglich) der zweiten Teilplattform 2b das Störkraft-Erfassungsmittel 11 fest montiert ist. Das zweite Ende des Störkraft-Erfassungsmittels 11 ist im Unterschied zu den anderen Kraftmessmitteln 4 an dem Schlitten 1b angeordnet. Hier an einem der gezeigten Seiten- bzw. Säulenelemente des Schlittens 1b. Somit kann beispielsweise eine Erfassung der Relativbewegung in X-Richtung zwischen der Wägeplattform 2 und der Bandeinheit 3 möglich sein, die eine zusätzliche und separate Ermittlung der Ventilationsverluste an den Rädern des Fahrzeugs F ermöglicht. Diese Ventilationsverluste können beispielsweise mit den weiteren erfassten Kraftwerten verrechnet werden, um die Messgenauigkeit der Windkanalwaage zu erhöhen.

Wie insbesondere die Figur 4 zeigt, stützt der Schlitten 1b die Seitenbänder 33. Der Schlitten 1b stützt sich in Z-Richtung über Schwimmlager 8 auf dem Fundament ab, in Y-Richtung liegt eine Kopplung mittels sogenannter Y-Lager 7a einer Verbindungseinrichtung 7 zu der Wägeplattform 2 vor. An der Wägeplattform 2 bzw. der unteren Teilplattform 2b ist auch das Fahrzeughaltesystem bzw. die Befestigungseinrichtung 5 befestigt. Die Verbindungseinrichtung 7 ist die gleiche, wie sie auch die Figur 1 zeigt. Seitliche Lager 7a, die eine möglichst reibungsfreie relative Bewegung zwischen der Teilplattform 2b und dem Schlitten 1b erlauben, sind Teil der Verbindungseinrichtung 7 bzw. bilden diese. Dadurch wird eine (starre) Kopplung in Y-Richtung erreicht. Die Lager 7a der Verbindungseinrichtung 7 sind als Gleitlager, Fluidlager und/oder Rollenlager an Seitenteilen des Schlittens 1b und der Wägeplattform 2 angeordnet gezeigt. Die Verbindungseinrichtung 7 ermöglicht eine Kopplung in Y-Richtung und unterbindet eine Relativbewegung der beiden Komponenten (Wägeplattform 2 und unteren Teilplattform 2b bzw. Wägeplattform 2) in Y-Richtung. In der X-Richtung kann jedoch eine möglichst reibungsfreie Relativbewegung zwischen der Wägeplattform 2 und dem Schlitten 1b stattfinden, d.h. diese wird nicht unterbunden. Es liegt folglich eine starre Kopplung in Y-Richtung zwischen Schlitten 1b und Teilplattform 2b vor.

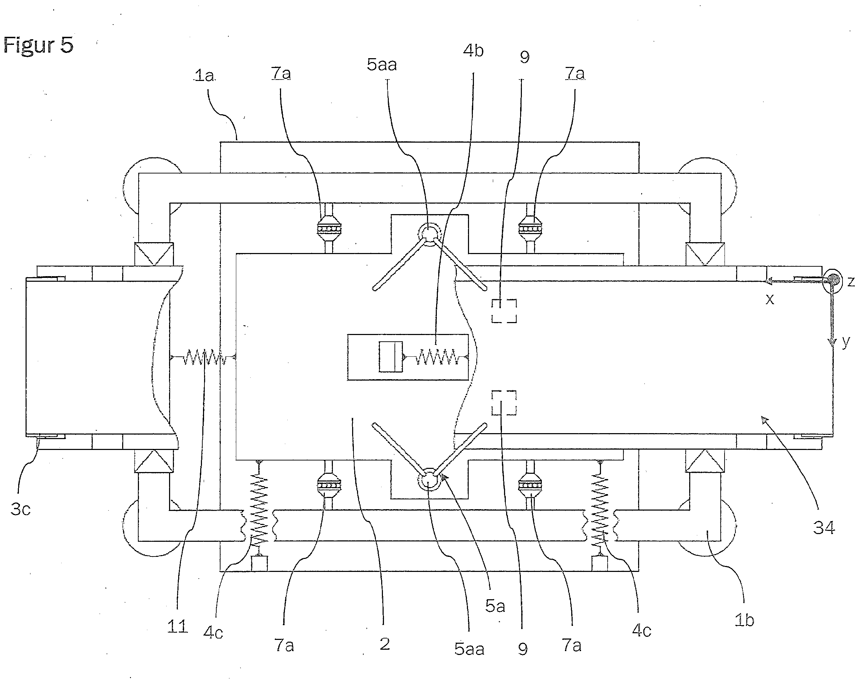

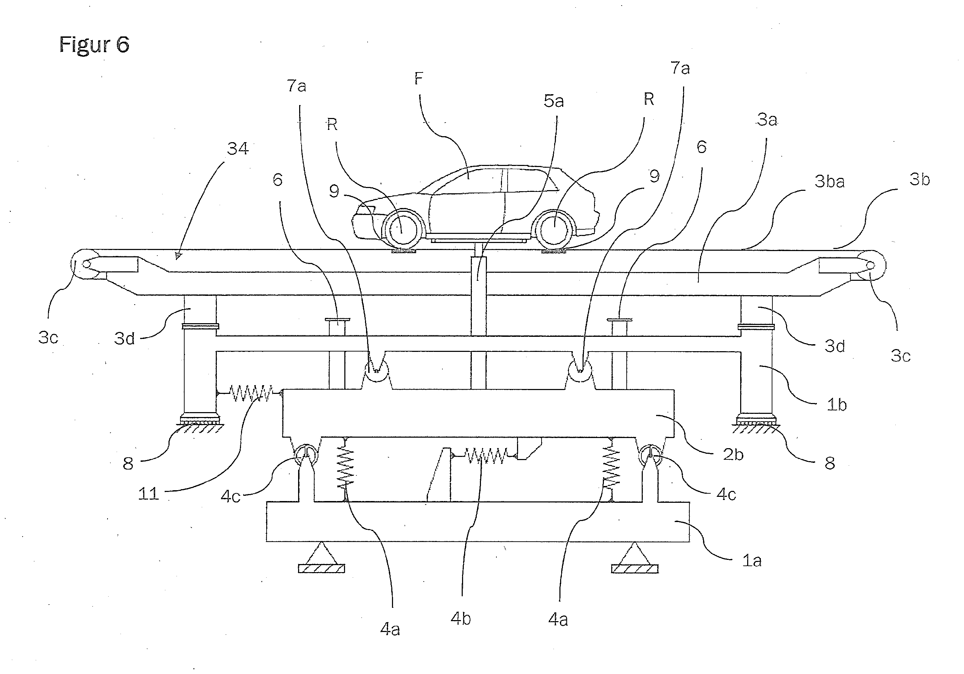

Ferner zeigen die Figuren 5 und 6 die Konstellation "Single-Belt" bzw. eine Einbandkonfiguration. Die Lagerung der einzelnen Komponenten und der Aufbau sind vergleichbar zu der vorbeschriebenen Dreibandkonfiguration. Allerdings ist nur eine einzelne große Bandeinheit 3, die Einbandeinheit 34, montiert, die mit ihrem gesamten Gewicht auf dem Schlitten 1b abgestellt ist. Der obere Teil der Wägeplattform 2, d.h. die zweite Teilplattform 2b, ist zusammen mit den Radbandeinheiten 31 und der Befestigungseinrichtung der Fünfbandkonfiguration entfernt worden.

Der Schlitten 1b ist so gelagert (wie insbesondere die Draufsicht der Figur 5 erkennen lässt), dass sich der Schlitten 1b in der X-Richtung relativ (über die gezeigten Krafterfassungsmittel) bewegen kann; und zwar sowohl zu dem Prüfstandrahmen 1a als auch der Wägeplattform 2. Der auf den Schwimmlagern 8 schwimmend gelagerte Schlitten 1b wird über das Störkraft-Erfassungsmittel 11 an der Wägeplattform 2 angedockt, so dass eine Relativbewegung zwischen diesen beiden Bauteilen im Hinblick auf die dabei übertragene Kraft erfasst werden kann, falls dies erwünscht sein sollte. Das Fahrzeughaltesystem 5 ist kraftschlüssig mit der Wägeplattform 2 verbunden. Während sich der Schlitten 1b in Z-Richtung, also vertikal, auf dem Fundament abstützt, sind die reibungsfreien Lager 7a (s. Figur 5) in Y-Richtung an der Wägeplattform 2 abgestützt. Dies ermöglicht es, dass an der Wägeplattform 2 die (globalen) aerodynamischen Kräfte in Y-Richtung, z. B. durch Schräganströmung, erfasst werden. Über das Störkraft-Erfassungsmittel 11, das den Schlitten 1b bzw. das Single-Belt mit der Wägeplattform 2 in X-Richtung verbindet, wird die Möglichkeit geschaffen, die Rad-Reibungskräfte von den Kräften, die die Wägeplattform 2 in X-Richtung erfasst, zu trennen und dadurch zu visualisieren.

Wiederrum sei angemerkt, dass die Ausschnitte und Durchbrüche der Figur 5 lediglich zeichnerisch bedingt sind, damit die insbesondere unter dem Laufband 3b angeordneten Komponenten/Bauteile des Prüfstandes 1 sichtbar gemacht werden können.

Weiterhin sei angemerkt, dass die Verbindungseinrichtung 7, die die Wägeplattform 2, 2b im Hinblick auf die Y-Richtung mit dem Schlitten 1b (starr) koppelt, umfassend Gleit- bzw. Rollenlager mit vier einzelnen seitlich an der zweiten Teilplattform 2b angeordneter Einzellager 7a gezeigt ist. Die reibfreien Lager 7a der Verbindungseinrichtung 7 können auch als Knicklager ausgebildet sein, d.h. die Lager bestehen dann aus Stangen bzw. säulenförmigen Trägern, die zwei um beispielsweise 90° zueinander in axialer Richtung verdrehte Querschnittsverjüngungen (Kerbungen, Aussparungen) aufweisen. Es können auch mehr als zwei Querschnittsverjüngungen je Träger vorgesehen sein. Die Bewegungsamplitude wird bei einer Lagerung mit Knickträgern meist stärker begrenzt sein, als bei Gleit- oder Rollenlagern.

Die Verbindungseinrichtung 7 lässt in dem gezeigten Fall, mit anderen Worten, eine relative Bewegung zwischen Wägeplattform 2 und Schlitten 1b in X-Richtung zu. X-Kräfte können einerseits mittels des X-Kraftmessmittels zwischen dem Prüfstandrahmen 1a und der Wägeplattform 2b erfasst werden und weiterhin können Ventilationsverluste und Radreibungsverluste in X-Richtung mittels des Störkraft-Erfassungsmittels 11, das zwischen dem Schlitten 1b und der Wägeplattform 2 angeordnet ist, gemessen werden.

Die Gewichtskräfte der Einbandeinheit 34 werden in Z-Richtung über die (im Wesentlichen) reibfreien Schwimmlager 8 in das gezeigte Fundament oder den Prüfstandrahmen 1a geleitet.

Figur 6 zeigt ferner, dass der Bandeinheitsrahmen 3a der Einbandeinheit 34 zwei Rollen 3c drehbar gelagert hält. Um diese Rollen 3c herum ist ein durchgehendes Laufband 3b angeordnet (geschlungen), dass beispielsweise durch eine Drehbewegung der Rollen 3c in Bewegung versetzt werden kann. Das Laufband 3b weist bei der Einbandbandeinheit 34 eine Breite auf, die größer ist als die des zu prüfenden Kraftfahrzeuges F. Der Prüfstandrahmen 1a kann drehbar um die Z-Achse zu seiner Umgebung gelagert sein (nicht gezeigt).

Zusammenfassend wird durch die hier beschriebene Vorrichtung ermöglicht, dass eine erhöhte Messgenauigkeit in Kombination mit einer schnellen und weniger aufwendigen Umrüstbarkeit zwischen verschiedenen Konfigurationen des Prüfstandes 1 ermöglicht werden.

Die Umrüstung gemäß dem hier beschriebenen Verfahren umfasst bei einer Umrüstung von dem in Figur 1 gezeigten Fünfbandaufbau auf einen Dreiband- oder Einbandaufbau gemäß den Figuren 3 oder 5 im Wesentlichen die Schritte, dass (bevorzugt zunächst) das Mittenband 32 und die erste Teilplattform 2a entfernt werden. Danach kann die Einbandeinheit 34 auf den Schlitten aufgesetzt werden, wenn eine Einbandkonfiguration aufgebaut werden soll. Die Verbindungen im Hinblick auf eine Kraftübertragung zwischen dem Schlitten 1b und der Einbandeinheit 34 müssen nicht mit zusätzlichem Aufwand gesichert werden, da die Einbandeinheit 34 bevorzugt alleine aufgrund der Gewichtskraft sicher auf dem Schlitten 1b aufsteht. Es können (mechanische) Führungen und der dgl. vorgesehen sein, die ein passgenaues und reproduzierbares Aufstellen der Einbandeinheit 34 erleichtern.

Medienanschlüsse (6a, 6b) zwischen dem unteren Teil des Prüfstandes 1 und der Einbandeinheit 34, z.B. solche für Druckluft, Wasser und elektrischen Strom, werden bevorzugt ebenfalls beim Aufstellen der Einbandeinheit selbsttätig miteinander verbunden. Dazu können an der Einbandeinheit 34, dem Schlitten 1b und/oder beiden Bauteilen geeignete Einrichtungen vorgesehen sein. Beispielsweise können sich translatorisch in X- und Y-Richtung selbstausrichtend gelagerte Anschlüsse vorgesehen sein, die mittels einer Führung aufeinander zugeführt werden können. Auch können beispielsweise bei Druckluft- und Wassermedienanschlüssen selbstrastende Schnellkupplungen vorgesehen sein.

Für den Fall, dass statt einer Einband- eine Dreibandkonfiguration aufgebaut werden soll, verändert sich der oben beschrieben Schritt des Aufstellens der Bandeinheit 3 insofern, dass eine Mittenbandeinheit 32 und zwei Seitenbandeinheiten 33 montiert werden.

Weitere Montagearbeiten können umfassen, dass die Befestigungseinrichtung 5 für die Einband- bzw. Dreibandkonfiguration auf der zweiten Teilplattform 2b montiert wird, falls diese für die Fünfbandkonfiguration demontiert worden sein sollte.

Die Umrüstung gemäß dem hier beschriebenen Verfahren umfasst bei einer Umrüstung von einem Dreiband- oder Einbandaufbau gemäß den Figuren 3 oder 5 auf den in Figur 1 gezeigten Fünfbandaufbau im Wesentlichen die oben erläuterten Schritte in anderer Reihenfolge. So wird/werden zunächst die Bandeinheit(en) 3 der Dreiband- oder Einbandaufbau entfernt und ggf. die Befestigungseinrichtung(en) 5a. Dann werden die erste Teilplattform 2a und die Mittenbandeinheit 32 aufgestellt, wobei die erste Teilplattform 2a bereits die (wichtigsten) Baugruppen, wie die Radbandeinheiten 31 und die Schwellerstützen 5b, vorinstalliert trägt. Wie oben bereits beschrieben wurde, werden Medienanschlüsse und Kraftverbindungen bevorzugt selbsttätig beim Aufsetzen der Mittenbandeinheit 32 und der ersten Teilplattform 2a miteinander verbunden, so dass dies nicht manuell ausgeführt werden muss.

Zusammenfassend erlaubt das Verfahren, dass ein sehr schnelles Umrüsten mit reduziertem Aufwand und nahezu vollständig automatisiert durchgeführt werden kann.

### Referenzzeichen liste

Prüfstandrahmen 1a
Schlitten 1b
Kraftfahrzeug F
Wägeplattform 2
Bandeinheit 3
Radbandeinheit 31
Mittenbandeinheit 32
Seitenbandeinheiten 33
Einbandbandeinheit 34
Bandeinheitsrahmen 3a
Laufband 3b; Obertrum 3ba
Rollen 3c
Bandeinheitlager 3d
Krafterfassungsmittel 4
Z-Krafterfassungsmittel 4a, X-Krafterfassungsmittel 4b, Y-Krafterfassungsmittel 4c
Teilplattformen: erste 2a, zweite 2b
Befestigungseinrichtung 5
Haltesystem 5a; erstes Befestigungselement 5aa; zweites Befestigungselement 5ab
Befestigungseinrichtung 5b
Kopplungsschnittstelle 6
fluidische Kopplungsschnittstelle 6a
elektrische Kopplungsschnittstelle 6b
Kraftübertragungsschnittstelle 6c
Verbindungseinrichtung 7
Schwimmlager 8
Wiegepad 9
Lager 10 für Rad R
Störkraft-Erfassungsmittel 11

## Patentansprüche

1. Windkanalprüfstand, insbesondere ein Mehrfachkonfigurations-Windkanalprüfstand, der zumindest in eine Einband-, Dreiband- und/oder Fünfbandkonfiguration umrüstbar ist,
mit
einem Prüfstandrahmen (1a) zum Aufnehmen von Kräften,
einer Wägeplattform (2), die relativ bewegbar zum Prüfstandrahmen (1a) gelagert ist,
zumindest einem Krafterfassungsmittel (4), das zwischen der Wägeplattform (2) und dem Prüfstandrahmen (1a) angeordnet ist, um Kräfte zwischen Wägeplattform (2) und Prüfstandrahmen (1a) zu erfassen, und
zumindest einer Bandeinheit (3) mit einem Laufband (3b), das um zwei Rollen (3c) geschlungen ist,
**gekennzeichnet durch**
einen Schlitten (1b) zur Aufnahme von zumindest einer Bandeinheit (3) einer Einband- oder Dreibandkonfiguration, wobei der Schlitten (1b) derart gelagert ist, dass der Schlitten (1b) in X- und Y-Richtung relativ bewegbar zum Prüfstandrahmen (1a) ist, und dass der Schlitten (1b) Kräfte in Z-Richtung getrennt von der Wägeplattform (2) in die Umgebung ableitet.

2. Windkanalprüfstand gemäß Anspruch 1, **gekennzeichnet dadurch, dass** der Schlitten (1b) und die Wägeplattform (2) derart in X- und/oder Y-Richtung gekoppelt sind, dass eine Relativbewegung zwischen dem Schlitten (1b) und der Wägeplattform (2) in der zugehörigen Richtung unterbunden ist.

3. Windkanalprüfstand gemäß zumindest einem der voranstehenden Ansprüche, **gekennzeichnet dadurch, dass** in einer Einbandkonfiguration eine Einbandbandeinheit (34) auf dem Schlitten (1b) angeordnet ist, oder
dass in einer Dreibandkonfiguration zumindest zwei Seitenbandeinheiten (33) auf dem Schlitten (1b) angeordnet sind.

4. Windkanalprüfstand gemäß zumindest einem der voranstehenden Ansprüche, **gekennzeichnet dadurch, dass** in der Drei- oder Fünfbandkonfiguration eine Mittenbandeinheit (32) zwischen Radbandeinheiten (31) der Fünfbandkonfiguration bzw. Seitenbandeinheiten (33) der Dreibandkonfiguration, auf denen die Räder des zu prüfenden Kraftfahrzeuges (F) aufstellbar sind, vorgesehen ist, wobei
die Mittenbandeinheit (32) auf dem Schlitten (1b) oder ortsfest gelagert ist.

5. Windkanalprüfstand gemäß zumindest einem der voranstehenden Ansprüche, **gekennzeichnet dadurch, dass** der Schlitten (1b) in Z-Richtung Kräfte in eine Umgebung ableitet und in X- und Y-Richtung schwimmend gelagert ist.

6. Windkanalprüfstand gemäß zumindest einem der voranstehenden Ansprüche, **gekennzeichnet dadurch, dass** die Wägeplattform (2) zumindest zwei Teilplattformen (2a, 2b) aufweist, die trennbar gelagert sind, wobei
auf der ersten Teilplattform (2a) zumindest eine Radbandeinheit (31) und eine Befestigungseinrichtung (5) der Fünfbandkonfiguration angeordnet sind.

7. Windkanalprüfstand gemäß Anspruch 6, **gekennzeichnet dadurch, dass** die zumindest eine Radbandeinheit (31) und die zumindest eine Befestigungseinrichtung (5) verschiebbar und arrtierbar auf der ersten Teilplattform (2a) gelagert sind.

8. Windkanalprüfstand gemäß zumindest einem der voranstehenden Ansprüche, **gekennzeichnet dadurch, dass** die Wägeplattform (2) zumindest zwei Teilplattformen (2a, 2b) aufweist, die trennbar gelagert sind, wobei
auf der ersten Teilplattform (2a) zumindest eine Radbandeinheit (31) und eine Befestigungseinrichtung (5) der Fünfbandkonfiguration vorinstalliert angeordnet sind, und wobei
die zumindest zwei Teilplattformen (2a, 2b) in einer Fünfbandkonfiguration des Windkanalprüfstandes miteinander verbunden sind, während eine erste Teilplattform (2a) in einer Dreiband- oder Einbandkonfiguration des Windkanalprüfstandes von der zweiten Teilplattform (2b) abgetrennt ist.

9. Windkanalprüfstand gemäß zumindest einem der voranstehenden Ansprüche, **gekennzeichnet dadurch, dass** der Windkanalprüfstand zumindest eine Befestigungseinrichtung (5) aufweist, die dazu geeignet ist, ein Kraftfahrzeug (F) in einer vorbestimmten Position auf dem Laufband (3b) festzuhalten, wobei
in einer Fünfbandkonfiguration des Windkanalprüfstandes die Befestigungseinrichtung (5) auf einer ersten Teilplattform (2a) der Wägeplattform (2) angeordnet ist; und
in einer Dreiband- oder Einbandkonfiguration des Windkanalprüfstandes die Befestigungseinrichtung (5) auf einer zweiten Teilplattform (2b) der Wägeplattform (2) angeordnet ist.

10. Windkanalprüfstand gemäß zumindest einem der voranstehenden Ansprüche 6 bis 9, **gekennzeichnet dadurch, dass** die erste und zweite Teilplattform (2a, 2b) zumindest eine vordefinierte Kopplungsschnittstelle (6) aufweist, wobei über die Kopplungsschnittstelle (6) zumindest X-, Y- und Z-Kräfte zwischen der ersten und zweiten Teilplattform (2a, 2b) übertragbar sind und bevorzugt ferner fluidische Medien und elektrische Ströme übertragbar sind.

11. Windkanalprüfstand gemäß zumindest einem der voranstehenden Ansprüche, **gekennzeichnet dadurch, dass** eine fluidische Kopplungsschnittstelle (6a) für die fluidischen Medien selbsttätige Schnellkupplungen aufweisen, die elektrischen Kopplungsschnittstellen (6b) selbstausrichtend gleitend gelagert sind und Kraftübertragungsschnittstellen (6c) Einrastelemente aufweisen.

12. Windkanalprüfstand gemäß zumindest einem der voranstehenden Ansprüche 6 bis 11, **gekennzeichnet dadurch, dass** das Krafterfassungsmittel (4), das die Wägeplattform (2) und den Prüfstandrahmen (1) verbindet, an der zweiten Teilplattform (2b) angeordnet ist.

13. Windkanalprüfstand gemäß zumindest einem der voranstehenden Ansprüche 6 bis 12, **gekennzeichnet dadurch, dass** zumindest ein Z-Krafterfassungsmittel (4a) zwischen dem Prüfstandrahmen (1) und der Wägeplattform (2), insbesondere der zweiten Teilplattform (2b) angeordnet ist, mit dem zumindest Z-Kräfte erfassbar sind, und/oder
dass ein Störkraft-Erfassungsmittel (11) zwischen dem Schlitten (1b) und der zweiten Teilplattform (2b) angeordnet ist.

14. Windkanalwaage nach zumindest einem der vorangegangenen Ansprüche **gekennzeichnet dadurch, dass** zumindest ein Lager unterhalb eines Obertrums (3ba) des zumindest einen Laufbandes (3b) einer Bandeinheit (3) angeordnet ist, wobei das Lager ein Wiegepad (9) ist, und wobei
das Wiegepad (9) derart angeordnet ist, dass das Kraftfahrzeug (F), wenn es auf dem Laufband (3b) fixiert ist, mit den Fahrzeugrädern oberhalb des zumindest einen Wiegepads (9) auf dem Laufband (3b) aufsteht, und wobei
das zumindest eine Wiegepad (9) Kräfte in z-Richtung, insbesondere die Gewichtskraft des Kraftfahrzeuges (F) und Auf- und/oder Abtriebskräfte, erfasst.

15. Windkanalwaage nach zumindest einem der vorangegangenen Ansprüche **gekennzeichnet dadurch, dass** die Befestigungseinrichtung (5) das Kraftfahrzeug (F) auf dem Laufband (3b) in einer festen Position, insbesondere oberhalb des zumindest einen Wiegepads (9) festhält, und
die Befestigungseinrichtung (5) das Kraftfahrzeug (F) derart fixiert, dass Kräfte in X-, Y- und/oder Z-Richtung vom Kraftfahrzeug (F) über die Befestigungseinrichtung (5) auf die Wägeplattform (2) übertragbar sind.

16. Verfahren zum Umrüsten eines Windkanalprüfstandes gemäß zumindest einem der voranstehenden Ansprüche, **gekennzeichnet dadurch, dass** für eine Umrüstung von einer Dreiband- oder Einbandkonfiguration auf eine Fünfbandkonfiguration die Einbandeinheit (34) von dem Schlitten (1b) entfernt wird,
die erste Teilplattform (2a) mit vorinstallierten Radbandeinheiten (31) und Befestigungseinrichtung (5) auf der zweiten Teilplattform (2b) aufgestellt wird, und
eine Mittenbandeinheit (32) zwischen den Radbandeinheiten (31) positioniert wird; oder
für eine Umrüstung von einer Fünfbandkonfiguration auf eine Einband- oder Dreibandkonfiguration die Mittenbandeinheit (32) entfernt wird,
die erste Teilplattform (2a) mit den montierten Radbandeinheiten (31) und der Befestigungseinrichtung (5) von der zweiten Teilplattform (2b) entfernt wird, und
die Bandeinheit (3) der Einband- oder Dreibandkonfiguration an dem Windkanalprüfstand angeordnet wird.

## Claims

1. A wind tunnel test stand, especially a multi-configuration wind tunnel test stand, convertible at least to a one-band, three-band and/or five-band configuration,
comprising
a test stand frame (1a) for receiving forces,
a weighing platform (2) supported movably in relation to said test stand frame (1a),
at least one force detecting means (4) arranged between said weighing platform (2) and said test stand frame (1a) to detect forces between weighing platform (2) and test stand frame (1a), and
at least one belt unit (3) comprising a moving belt (3b) wrapped around two reels (3c),
**characterized by**
a slide (1b) for receiving at least a belt unit (3) of a one-band or three-band configuration, said slide (1b) supported such that said slide (1b) is movable in X and Y directions in relation to said test stand frame (1a), and that said slide (1b) transfers forces in a Z direction separately from said weighing platform (2) to a bearing base.

2. The wind tunnel test stand according to claim 1, wherein
said slide (1b) and said weighing platform (2) are coupled in X and/or Y direction such that a relative motion between said slide (1b) and said weighing platform (2) in the associated direction is inhibited.

3. The wind tunnel test stand according to at least one of the previous claims, wherein
in a one-band configuration, a one-band band unit (34) is arranged on said slide (1b), or
in a three-band configuration, at least two side-band units (33) are arranged on said slide (1b).

4. The wind tunnel test stand according to at least one of the previous claims, wherein
in said three-band or five-band configuration, a center-band unit (32) is provided between wheel-band units (31) of said five-band configuration or side-band units (33) of said three-band configuration, respectively, on which the wheels of the motor vehicle (F) to be tested can be placed, wherein
said center-band unit (32) is supported on said slide (1b) or stationarily.

5. The wind tunnel test stand according to at least one of the previous claims, wherein
said slide (1b) is floatingly supported in said X and Y directions.

6. The wind tunnel test stand according to at least one of the previous claims, wherein
said weighing platform (2) comprises at least two detachably supported partial platforms (2a, 2b), and
at least a wheel-band unit (31) and an attachment device (5) of said five-band configuration are arranged on said first partial platform (2a).

7. The wind tunnel test stand according to claim 6, wherein
said at least one wheel-band unit (31) and said at least one attachment device (5) are supported slidably and in a lockable manner on said first partial platform (2a).

8. The wind tunnel test stand according to at least one of the previous claims, wherein
said weighing platform (2) comprises at least two detachably supported partial platforms (2a, 2b),
at least a wheel-band unit (31) and an attachment device (5) of said five-band configuration are arranged on said first partial platform (2a) in a preinstalled manner, and
said at least two partial platforms (2a, 2b) are connected to each other in a five-band configuration of said wind tunnel test stand, while a first partial platform (2a) is separated from said second partial platform (2b) in a three-band or one-band configuration of said wind tunnel test stand.

9. The wind tunnel test stand according to at least one of the previous claims, wherein
said wind tunnel test stand comprises at least one attachment device (5) applicable to holding a motor vehicle (F) in a predetermined position on said moving belt (3b), wherein
in a five-band configuration of said wind tunnel test stand, said attachment device (5) is arranged on a first partial platform (2a) of said weighing platform (2); and
in a three-band or one-band configuration of said wind tunnel test stand, said attachment device (5) is arranged on a second partial platform (2b) of said weighing platform (2).

10. The wind tunnel test stand according to at least one of the previous claims 6 to 9, wherein
said first and second partial platform (2a, 2b) comprising at least one predefined coupling interface (6), wherein via said coupling interface (6) at least X, Y and Z forces are transferable between said first and second partial platforms (2a, 2b) and, preferably, further fluidic media and electric currents are transferable.

11. The wind tunnel test stand according to at least one of the previous claims, wherein
a fluidic coupling interface (6a) for said fluidic media comprises automatic quick couplings, said electric coupling interfaces (6b) are slidingly supported in a self-aligning manner, and power transmission interfaces (6c) comprise engagement elements.

12. The wind tunnel test stand according to at least one of the previous claims 6 to 11, wherein
said force detecting means (4) connecting said weighing platform (2) and said test stand frame (1) is arranged on said second partial platform (2b).

13. The wind tunnel test stand according to at least one of the previous claims 6 to 12, wherein
at least a Z-force detecting means (4a), by which at least Z forces are detectible, is arranged between said test stand frame (1) and said weighing platform (2), especially said second partial platform (2b), and/or
a disruptive-force detection means (11) is arranged between said slide (1b) and said second partial platform (2b).

14. The wind tunnel scale according to least one the previous claims, wherein
at least a bearing is arranged below upper runs (3ba) of said at least one moving belt (3b) of a belt unit (3), said bearing being a weigh pad (9), and wherein
said weigh pad (9) is arranged such that said motor vehicle (F), when being fixed on said moving belt (3b), stands on said moving belt (3b) with said vehicle wheels above said at least one weigh pad (9), and wherein
said at least one weigh pad (9) detects forces in said z direction, especially the weight of said motor vehicle (F) and lifting forces and/or downforces.

15. The wind tunnel scale according to least one the previous claims, wherein
said attachment device (5) holds said motor vehicle (F) on said moving belt (3b) in a fixed position, especially above said at least one weigh pad (9), and
said attachment device (5) fixes said motor vehicle (F) such that forces are transferable in X, Y, and/or Z directions from said motor vehicle (F) via said attachment device (5) to said weighing platform (2).

16. A method for converting a wind tunnel test stand according to at least one of the previous claims, **characterized in that**, for a conversion of a three-band or one-band configuration to a five-band configuration, said one-band unit (34) of said slide (1b) is removed,
said first partial platform (2a) with preinstalled wheel-band units (31) and attachment device (5) is placed on said second partial platform (2b), and
a center-band unit (32) is positioned between said wheel-band units (31); or
for a conversion of a five-band configuration to a one-band or three-band configuration, said center-band unit (32) is removed,
said first partial platform (2a) with said mounted wheel-band units (31) and said attachment device (5) is removed from said second partial platform (2b), and
said belt unit (3) of said one-band or three-band configuration is arranged on said wind tunnel test stand.

## Revendications

1. Banc d'essai en soufflerie aérodynamique, en particulier banc d'essai en soufflerie aérodynamique à configurations multiples, qui peut être converti au moins en une configuration à bande unique, à trois bandes et/ou à cinq bandes,
comportant
un cadre de banc d'essai (1a) destiné à encaisser des forces,
une plate-forme de pesage (2) montée de manière mobile par rapport au cadre de banc d'essai (1a),
au moins un moyen de détection de forces (4) disposé entre la plate-forme de pesage (2) et le cadre de banc d'essai (1a), afin de détecter les forces entre la plate-forme de pesage (2) et le cadre de banc d'essai (1a), et
au moins une unité de bande (3) présentant une bande de roulement (3b) qui est enlacée autour de deux rouleaux (3c),
**caractérisé par**
un chariot (b) destiné à recevoir au moins une unité de bande (3) d'une configuration à bande unique ou à trois bandes, le chariot (1b) étant monté de telle sorte que le chariot (1b) peut se déplacer dans les directions X et Y par rapport au cadre de banc d'essai (1a) et que le chariot (1b) fait dériver les forces dans la direction Z vers une base de support, séparément de la plate-forme de pesage (2).

2. Banc d'essai en soufflerie aérodynamique selon la revendication 1,
dans lequel le chariot (1b) et la plate-forme de pesage (2) sont couplés en direction X et/ou Y de telle sorte qu'un mouvement relatif entre le chariot (1b) et la plate-forme de pesage (2) dans la direction associée est empêché.

3. Banc d'essai en soufflerie aérodynamique selon au moins l'une des revendications précédentes,
dans lequel, dans une configuration à bande unique, une unité de bande (34) à bande unique est disposée sur le chariot (1b), ou
dans une configuration à trois bandes, au moins deux unités de bande latérale (33) sont disposées sur le chariot (1b).

4. Banc d'essai en soufflerie aérodynamique selon l'une au moins des revendications précédentes,
dans lequel, dans la configuration à trois ou cinq bandes, une unité de bande centrale (32) est prévue entre des unités de bande pour roue (31) de la configuration à cinq bandes ou entre des unités de bande latérale (33) de la configuration à trois bandes, sur lesquelles peuvent venir se poser les roues du véhicule automobile (F) à inspecter, et
l'unité de bande centrale (32) est montée sur le chariot (1b) ou de manière fixe.

5. Banc d'essai en soufflerie aérodynamique selon l'une au moins des revendications précédentes,
dans lequel le chariot (1b) est monté de manière flottante en direction X et Y.

6. Banc d'essai en soufflerie aérodynamique selon l'une au moins des revendications précédentes,
dans lequel la plate-forme de pesage (2) présente au moins deux plates-formes partielles (2a, 2b) qui sont montées de manière séparable, et
sur la première plateforme partielle (2a) sont disposés au moins une unité de bande pour roue (31) et un dispositif de fixation (5) de la configuration à cinq bandes.

7. Banc d'essai en soufflerie aérodynamique selon la revendication 6,
dans lequel ladite au moins une unité de bande pour roue (31) et ledit au moins un dispositif de fixation (5) sont montés de manière à pouvoir être déplacés et être arrêtés sur la première plate-forme partielle (2a).

8. Banc d'essai en soufflerie aérodynamique selon l'une au moins des revendications précédentes,
dans lequel la plate-forme de pesage (2) présente au moins deux plates-formes partielles (2a, 2b) qui sont montées de manière séparable, et
sur la première plate-forme partielle (2a) sont disposés, de manière préinstallée, au moins une unité de bande pour roue (31) et un dispositif de fixation (5) de la configuration à cinq bandes, et
lesdites au moins deux plates-formes partielles (2a, 2b) sont reliées entre elles dans une configuration à cinq bandes du banc d'essai en soufflerie aérodynamique, tandis qu'une première plate-forme partielle (2a) est séparée de la deuxième plate-forme partielle (2b) dans une configuration à trois bandes ou à bande unique du banc d'essai en soufflerie aérodynamique.

9. Banc d'essai en soufflerie aérodynamique selon l'une au moins des revendications précédentes,
dans lequel le banc d'essai en soufflerie aérodynamique comprend au moins un dispositif de fixation (5) apte à maintenir un véhicule automobile (F) dans une position prédéterminée sur la bande de roulement (3b), et
dans une configuration à cinq bandes du banc d'essai en soufflerie aérodynamique, le dispositif de fixation (5) est disposé sur une première plate-forme partielle (2a) de la plate-forme de pesage (2) ; et
dans une configuration à trois bandes ou à bande unique du banc d'essai en soufflerie aérodynamique, le dispositif de fixation (5) est disposé sur une deuxième plate-forme partielle (2b) de la plate-forme de pesage (2).

10. Banc d'essai en soufflerie aérodynamique selon l'une au moins des revendications précédentes 6 à 9,
dans lequel la première et la deuxième plate-forme partielle (2a, 2b) présentent au moins une interface de couplage (6) prédéfinie,
l'interface de couplage (6) permet de transmettre au moins des forces X, Y et Z entre la première et la deuxième plate-forme partielle (2a, 2b), et de transmettre, de préférence, en outre des fluides et des courants électriques.

11. Banc d'essai en soufflerie aérodynamique selon l'une au moins des revendications précédentes,
dans lequel une interface de couplage fluidique (6a) pour les fluides présente des coupleurs rapides automatiques, les interfaces de couplage électrique (6b) sont montées avec faculté de coulissement et d'auto-alignement, et les interfaces de transmission de force (6c) présentent des éléments d'enclenchement.

12. Banc d'essai en soufflerie aérodynamique selon l'une au moins des revendications précédentes,
dans lequel le moyen de détection de forces (4) reliant la plate-forme de pesage (2) et le cadre de banc d'essai (1) est disposé sur la deuxième plate-forme partielle (2b).

13. Banc d'essai en soufflerie aérodynamique selon l'une au moins des revendications précédentes 6 à 12,
dans lequel au moins un moyen de détection de forces Z (4a) est disposé entre le cadre de banc d'essai (1) et la plate-forme de pesage (2), en particulier la deuxième plate-forme partielle (2b), moyen qui permet de détecter au moins des forces Z, et/ou
un moyen de détection de force perturbatrice (11) est disposé entre le chariot (1b) et la deuxième plate-forme partielle (2b).

14. Banc d'essai en soufflerie aérodynamique selon l'une au moins des revendications précédentes,
dans lequel au moins un palier est disposé en dessous d'un brin supérieur (3ba) de ladite au moins une bande de roulement (3b) d'une unité de bande (3), ledit palier étant un plateau de pesée (9), et
le plateau de pesée (9) est disposé de telle sorte que le véhicule automobile (F), lorsqu'il est fixé sur la bande de roulement (3b), vient se poser sur la bande de roulement (3b) en ayant les roues du véhicule situées au-dessus dudit au moins un plateau de pesée (9), et
ledit moins un plateau de pesée (9) détecte des forces dans la direction z, en particulier le poids du véhicule automobile (F) et des forces ascensionnelles et/ou descensionnelles.

15. Banc d'essai en soufflerie aérodynamique selon l'une au moins des revendications précédentes,
dans lequel le dispositif de fixation (5) maintient le véhicule automobile (F) sur la bande de roulement (3b) dans une position fixe, en particulier au-dessus dudit au moins un plateau de pesée (9), et
le dispositif de fixation (5) fixe le véhicule automobile (F) de telle sorte que des forces en direction X, Y et/ou Z peuvent être transmises du véhicule automobile (F) à la plate-forme de pesage (2) par l'intermédiaire du dispositif de fixation (5).

16. Procédé de conversion d'un banc d'essai en soufflerie aérodynamique selon l'une au moins des revendications précédentes,
**caractérisé en ce que**, en vue d'une conversion pour passer d'une configuration à trois bandes ou à bande unique vers une configuration à cinq bandes, l'unité à bande unique (34) est retirée du chariot (1b),
la première plate-forme partielle (2a), ayant les unités de bande pour roue (31) et le dispositif de fixation (5) préinstallés, est placée sur la deuxième plate-forme partielle (2b), et
une unité de bande centrale (32) est positionnée entre les unités de bande pour roue (31) ; ou
en vue d'une conversion pour passer d'une configuration à cinq bandes vers une configuration à bande unique ou à trois bandes, l'unité de bande centrale (32) est retirée,
la première plate-forme partielle (2a), ayant les unités de bande pour roue (31) et le dispositif de fixation (5) montés, est retirée de la deuxième plate-forme partielle (2b), et
l'unité de bande (3) de la configuration à bande unique ou à trois bandes est agencée sur le banc d'essai en soufflerie aérodynamique.
